(19) **Europäisches Patentamt**
**European Patent Office**
**Office européen des brevets**

(11) **EP 4 462 158 A1**

(12) **EUROPEAN PATENT APPLICATION**
published in accordance with Art. 153(4) EPC

(43) Date of publication:
**13.11.2024 Bulletin 2024/46**

(51) International Patent Classification (IPC):
**G01S 13/34** *(2006.01)*    **G01S 7/02** *(2006.01)*

(21) Application number: **22922950.5**

(52) Cooperative Patent Classification (CPC):
**G01S 7/02; G01S 13/34**

(22) Date of filing: **30.01.2022**

(86) International application number:
**PCT/CN2022/075257**

(87) International publication number:
**WO 2023/142126 (03.08.2023 Gazette 2023/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **CHANG, Guanghong
Shenzhen, Guangdong 518129 (CN)**

• **LI, Ting
Shenzhen, Guangdong 518129 (CN)**
• **CHENG, Zhiwen
Shenzhen, Guangdong 518129 (CN)**
• **ZHAO, Jiejun
Shenzhen, Guangdong 518129 (CN)**

(74) Representative: **Maiwald GmbH
Engineering
Elisenhof
Elisenstrasse 3
80335 München (DE)**

(54) **DETECTION APPARATUS, TERMINAL DEVICE, AND SIGNAL PROCESSING METHOD**

(57) A detection apparatus, a terminal device, and a signal processing method are provided, to resolve a problem in the conventional technology that missing detection of a target is caused when a distance resolution of a detection apparatus is improved. The detection apparatus, the terminal device, and the signal processing method may be applied to the fields such as autonomous driving, intelligent driving, assisted driving, or connected vehicles. The detection apparatus includes: a transmit module, configured to transmit a first signal group and a second signal group, where M first signals included in the first signal group and N second signals included in the second signal group are alternately distributed; and a receiving module, configured to receive a third signal group obtained after the first signal group is reflected by a target and a fourth signal group obtained after the second signal group is reflected by the target, where the third signal group and the fourth signal group are used to determine association information of the target. Distance-speed coupling causes missing detection of the target in one frequency step direction, and does not cause missing detection of the target in another frequency step direction. Therefore, missing detection of the target caused by the distance-speed coupling can be reduced or eliminated. In addition, the distance resolution of the detection apparatus can be improved by using a frequency step.

FIG. 5a

Description

## TECHNICAL FIELD

This application relates to the field of detection technologies, and in particular, to a detection apparatus, a terminal device, and a signal processing method.

## BACKGROUND

With development of science and technology, intelligent terminals such as an intelligent transportation device, a smart household device, a robot, and a vehicle are gradually entering people's daily lives. A detection apparatus may sense a surrounding environment. Further, the detection apparatus may identify and track a moving target based on sensed environment information, identify a static target like a lane line or a sign. In addition, the detection apparatus may perform path planning and the like in combination of a navigator, map data, and the like. Therefore, the detection apparatus plays an increasingly important role in the intelligent terminal.

A detection apparatus that is widely used is, for example, a radar. One of important functional parameters of the radar is a distance resolution. The distance resolution is a resolution in a distance dimension, and specifically refers to a minimum distance between two targets that can be identified by the radar. A smaller minimum distance between the two targets indicates a better distance resolution. The distance resolution is related to a transmit signal bandwidth of the radar, and a high distance resolution requires a transmit signal having a large bandwidth. However, an implementation of continuous large-bandwidth transmit signals is difficult, and has a high requirement for costs. Therefore, currently, a stepped-frequency bandwidth is mostly used. For example, a stepped-frequency frequency modulated continuous waveform (frequency modulated continuous waveform, FMCW) is used as a transmit signal. However, a distance-speed coupling phenomenon is introduced by using the stepped-frequency FMCW, and therefore, a target meeting a specific distance-speed relationship cannot be identified. This causes problems such as missing detection of the target.

In conclusion, how to improve the distance resolution of the detection apparatus without causing the missing detection is a current technical problem that urgently needs to be resolved.

## SUMMARY

This application provides a detection apparatus, a terminal device, and a signal processing method, to reduce or eliminate missing detection of a target caused by distance-speed coupling when a distance resolution of the detection apparatus is improved.

According to a first aspect, this application provides a detection apparatus. The detection apparatus may include a transmit module and a receiving module. The transmit module is configured to transmit a first signal group and a second signal group, where frequency step directions of the first signal group and the second signal group are different, the first signal group includes M first signals, the second signal group includes N second signals, and the M first signals and the N second signals are alternately distributed. The receiving module is configured to receive a third signal group and a fourth signal group, where a third signal included in the third signal group is an echo signal obtained after the first signal is reflected by a target, a fourth signal included in the fourth signal group is an echo signal obtained after the second signal is reflected by the target, and the third signal group and the fourth signal group are used to determine association information of the target. For example, the $1^{st}$ third signal in the third signal group is an echo signal of the $1^{st}$ first signal in the first signal group. Further, optionally, the association information of the target is information related to the target, and may be understood as follows: When the association information of the target includes a speed, a speed 1 of the target may be obtained based on the third signal group, a speed 2 of the target may be obtained based on the fourth signal group, and a first speed of the target may be further obtained based on the speed 1 and the speed 2. Similarly, when the association information of the target includes a distance, a distance 1 of the target may be obtained based on the third signal group, a distance 2 of the target may be obtained based on the fourth signal group, and a first distance of the target may be further obtained based on the distance 1 and the distance 2.

Based on the foregoing solution, two groups having different frequency step directions, namely, the first signal group and the second signal group, are transmitted. Targets that are missed in detection performed by the two groups of signals having different frequency step directions have different distance-speed coupling characteristics. To be specific, distance-speed coupling causes missing detection of the target in one frequency step direction, but does not causes missing detection of the target in another frequency step direction. Therefore, missing detection of the target caused by the distance-speed coupling can be reduced or eliminated by transmitting the two groups having different frequency step directions, namely, the first signal group and the second signal group. Further, a frequency step is used for the first signal group and the second signal group. Therefore, a total bandwidth may be increased, so that a distance resolution of the detection apparatus can be improved.

In a possible implementation, a frequency step direction of the first signal group is an upward step, and a frequency step direction of the second signal group is a downward step; or a frequency step direction of the first signal group is a downward step, and a frequency step direction of the second signal group is an upward step.

When the distance-speed coupling causes missing detection of a target in the upward step, the distance-speed coupling does not cause missing detection of the target in the downward step; or when the distance-speed coupling causes missing detection of a target in the downward step, the distance-speed coupling does not cause missing detection of the target in the upward step. In this way, missing detection of the target caused by the distance-speed coupling can be reduced or eliminated.

In a possible implementation, one first signal and one second signal are alternately distributed; or at least two continuous first signals and at least one continuous second signal are alternately distributed; or at least one continuous first signal and at least two continuous second signals are alternately distributed; or the first signal group and the second signal group are alternately distributed.

In a distribution manner in which one first signal and one second signal are alternately distributed, or the at least two continuous first signals and the at least one continuous second signal are alternately distributed, or the at least one continuous first signal and the at least two continuous second signals are alternately distributed, targets detected by the first signal group and the second signal group are the same. Further, different alternate distribution manners may adapt to different speed ambiguity resolving methods. In addition, an unambiguous speed of the target can be reported based on one frame of measurement result, and a signal-level processing process is simple. In a manner in which the first signal group and the second signal group are alternately distributed, targets detected by the first signal group and the second signal group may be different. Generally, the different targets need to be associated first, and this helps simplify a signal processing process.

In a possible implementation, a first pulse repetition interval is the same as or different from a corresponding second pulse repetition interval. The first pulse repetition interval is a time interval between an $i^{th}$ first signal and an $(i+k_1)^{th}$ first signal in the first signal group, $k_1$ is a positive integer, and i is any integer in [1, M]. The corresponding second pulse repetition interval is a time interval between a $z^{th}$ second signal and a $(z+k_2)^{th}$ second signal in the second signal group, $k_2$ is a positive integer, and z is any integer in [1, N].

For example, the first pulse repetition interval is a time interval between the $i^{th}$ first signal and an $(i+1)^{th}$ first signal in the first signal group, and the corresponding second pulse repetition interval is a time interval between an $i^{th}$ second signal and an $(i+1)^{th}$ second signal in the second signal group.

When the first pulse repetition interval is the same as the second pulse repetition interval, a first distance-Doppler spectrum obtained based on the first signal group and a second distance-Doppler spectrum obtained based on the second signal group have a same unambiguous speed measurement range. In addition, non-coherent accumulation may be performed on the first distance-Doppler spectrum and the second distance-Doppler spectrum, to help increase a signal-to-noise ratio of a target.

In a possible implementation, any two first pulse repetition intervals in the first signal group are the same, and/or any two second pulse repetition intervals in the second signal group are the same.

In a possible implementation, at least two first pulse repetition intervals in the first signal group are different; and/or at least two second pulse repetition intervals in the second signal group are different.

The first pulse repetition intervals of the M first signals in the first signal group are set to be different, so that coherence of a quadratic term of a chirp index (or an index of a chirp number) that is introduced in second-dimensional FFT processing due to a frequency step can be reduced or eliminated. This can improve a capability of the first signal for resisting nonlinear effect. The second pulse repetition intervals of the N second signals in the second signal group are set to be different, so that coherence of a quadratic term of a chirp index that is introduced in second-dimensional FFT processing due to a frequency step can be reduced or eliminated. This can improve a capability of the second signal for resisting nonlinear effect.

In a possible implementation, an absolute value of a difference between an absolute value of a first frequency step size and an absolute value of a corresponding second frequency step size is less than or equal to a first threshold. The first frequency step size is a frequency offset between an $(m+k_1)^{th}$ first signal and an $m^{th}$ first signal in the first signal group, $k_1$ is a positive integer, and m is any integer in [1, M]. The second frequency step size is a frequency offset between an $(n+k_2)^{th}$ second signal and an $n^{th}$ second signal in the second signal group, $k_2$ is a positive integer, and n is any integer in [1, N].

For example, the first frequency step size is a frequency offset between an $(m+1)^{th}$ first signal and the $m^{th}$ first signal in the first signal group, and the second frequency step size is a frequency offset between an $(m+1)^{th}$ second signal and an $m^{th}$ second signal in the second signal group.

In a possible implementation, the absolute value of the difference between the absolute value of the first frequency step size and the absolute value of the corresponding second frequency step size is equal to 0.

The absolute value of the first frequency step size is equal to the absolute value of the corresponding second frequency step size, so that the first distance-Doppler spectrum obtained based on the first signal group and the second distance-Doppler spectrum obtained based on the second signal group have a same Doppler shift caused by a distance.

In a possible implementation, an absolute value of a difference between any two first frequency step sizes in the first signal group is less than or equal to a second threshold, and/or an absolute value of a difference between any two second frequency step sizes in the second signal group is less than or equal to a third threshold.

When the absolute value of the difference between the any two first frequency step sizes in the first signal group is greater than 0, the first frequency step size may change randomly. This helps prevent the first signal from being continuously interfered by another external signal, so that an anti-interference capability of the first signal can be improved. When the absolute value of the difference between the any two second frequency step sizes in the second signal group is greater than 0, the second frequency step size may change randomly. This helps prevent the second signal from being continuously interfered by another external signal, so that an anti-interference capability of the second signal can be improved.

In a possible implementation, the absolute value of the difference between the any two first frequency step sizes in the first signal group is equal to 0, and/or the absolute value of the difference between the any two second frequency step sizes in the second signal group is equal to 0.

The absolute value of the difference between the any two first frequency step sizes in the first signal group is equal to 0. This helps improve coherent processing effect of the first signal. The absolute value of the difference between the any two second frequency step sizes in the second signal group is equal to 0. This helps improve coherent processing effect of the second signal.

In a possible implementation, M is equal to N.

A quantity of first signals included in the first signal group is set to be the same as a quantity of second signals included in the second signal group, so that the first distance-Doppler spectrum and the second distance-Doppler spectrum can have a same quantity of Doppler units in a slow time dimension, thereby facilitating subsequent processing of non-coherent accumulation.

In a possible implementation, the detection apparatus further includes a processing module. The processing module is configured to: determine a third signal group and a fourth signal group, where the third signal group includes M third signals, the fourth signal group includes N fourth signals, the M third signals are echo signals obtained after the M first signals are reflected by the target, and the N fourth signals are echo signals obtained after the N second signals are reflected by the target; perform two-dimensional fast Fourier transform (fast Fourier transform, FFT) on the third signal group to obtain the first distance-Doppler spectrum, and perform two-dimensional FFT on the fourth signal group to obtain the second distance-Doppler spectrum, where the two-dimensional FFT includes distance dimension FFT and Doppler dimension FFT; and determine the association information of the target based on the first distance-Doppler spectrum and the second distance-Doppler spectrum.

Two-dimensional FFT is separately performed on the third signal group and the fourth signal group, to obtain the first distance-Doppler spectrum and the second distance-Doppler spectrum, so that the association information of the target can be obtained based on the first distance-Doppler spectrum and the second distance-Doppler spectrum. Further, when the association information of the target is obtained, detection of a distance-speed coupled target has already been implemented.

In a possible implementation, the association information of the target includes the first distance and the first speed of the target. The processing module is specifically configured to: perform cyclic shift on the first distance-Doppler spectrum in a Doppler dimension based on a distance unit to obtain a third distance-Doppler spectrum, and perform non-coherent accumulation on the third distance-Doppler spectrum and the second distance-Doppler spectrum, where a target in the third distance-Doppler spectrum coincides with a target in the second distance-Doppler spectrum; or perform cyclic shift on the second distance-Doppler spectrum in a Doppler dimension based on a distance unit to obtain a fourth distance-Doppler spectrum, and perform non-coherent accumulation on the fourth distance-Doppler spectrum and the first distance-Doppler spectrum, where a static target in the fourth distance-Doppler spectrum coincides with a static target in the first distance-Doppler spectrum; and detect a distance-Doppler spectrum obtained through the non-coherent accumulation, to obtain the first distance and the first speed of the target.

Non-coherent accumulation is performed on the third distance-Doppler spectrum and the second distance-Doppler spectrum, or non-coherent accumulation is performed on the fourth distance-Doppler spectrum and the first distance-Doppler spectrum, so that a signal-to-noise ratio can be increased, to help improve accuracy of the determined first distance and first speed of the target.

In a possible implementation, the association information of the target includes the first distance and the first speed of the target. The processing module is specifically configured to: detect the first distance-Doppler spectrum, to obtain a second distance and a second speed of the target; detect the second distance-Doppler spectrum, to obtain a third distance and a third speed of the target; fuse the second distance and the third distance, to obtain the first distance of the target; and fuse the second speed and the third speed, to obtain the first speed of the target.

The second distance and the third distance are fused, to obtain the first distance. This helps improve accuracy of the first distance. The second speed and the third speed are fused, to obtain the first speed. This helps improve accuracy of the first speed.

In a possible implementation, the first pulse repetition interval is different from the second pulse repetition interval. The processing module is further configured to: obtain a phase difference of the target based on the first distance-Doppler spectrum and the second distance-Doppler spectrum; obtain a fourth speed of the target based on the phase difference; and determine a fifth speed of the target based on the first speed and the fourth speed of the target.

The ambiguity resolving fifth speed may be obtained based on the first speed and the fourth speed. Specifically, when the fourth speed generates speed ambiguity, the fourth speed corresponds to a first maximum speed ambiguity range; and when the first speed generates speed ambiguity, the first speed corresponds to a second maximum speed ambiguity range. The first maximum speed ambiguity range corresponding to the first speed is different from the second maximum speed ambiguity range corresponding to the fourth speed. Therefore, when the first speed plus s times the second maximum speed ambiguity range is equal to the fourth speed plus h times the first maximum speed ambiguity range, the fifth speed of the target may be determined. The fifth speed is an ambiguity resolving speed, where s and h are integers.

According to a second aspect, this application provides a terminal device. The terminal device includes a control apparatus and the detection apparatus in the first aspect or any possible implementation of the first aspect. The control apparatus is configured to plan a driving path based on association information of a target from the detection apparatus.

According to a third aspect, this application provides a signal processing method. The method includes: transmitting a first signal group and a second signal group, where M first signals included in the first signal group and N second signals included in the second signal group are alternately distributed; and receiving a third signal group and a fourth signal group, where the third signal group and the fourth signal group are used to determine association information of a target, a third signal included in the third signal group is an echo signal obtained after the first signal is reflected by the target, and a fourth signal included in the fourth signal group is an echo signal obtained after the second signal is reflected by the target.

The method may be applied to the detection apparatus in the first aspect or any possible implementation of the first aspect.

In a possible implementation, the method further includes: determining the third signal group and the fourth signal group, where the third signal group includes M third signals, the fourth signal group includes N fourth signals, the M third signals are echo signals obtained after the M first signals are reflected by the target, and the N fourth signals are echo signals obtained after the N second signals are reflected by the target; performing FFT on the third signal group to obtain the first distance-Doppler spectrum, and performing two-dimensional FFT on the fourth signal group to obtain the second distance-Doppler spectrum, where the two-dimensional FFT includes distance dimension FFT and Doppler dimension FFT; and determining the association information of the target based on the first distance-Doppler spectrum and the second distance-Doppler spectrum.

In a possible implementation, the association information of the target includes the first distance and the first speed of the target. The determining the association information of the target based on the first distance-Doppler spectrum and the second distance-Doppler spectrum includes: performing cyclic shift on the first distance-Doppler spectrum in a Doppler dimension based on a distance unit to obtain a third distance-Doppler spectrum, and performing non-coherent accumulation on the third distance-Doppler spectrum and the second distance-Doppler spectrum, where a target in the third distance-Doppler spectrum coincides with a target in the second distance-Doppler spectrum; or performing cyclic shift on the second distance-Doppler spectrum in a Doppler dimension based on a distance unit to obtain a fourth distance-Doppler spectrum, and performing non-coherent accumulation on the fourth distance-Doppler spectrum and the first distance-Doppler spectrum, where a static target in the fourth distance-Doppler spectrum coincides with a static target in the first distance-Doppler spectrum; and detecting a distance-Doppler spectrum obtained through the non-coherent accumulation, to obtain the first distance and the first speed of the target.

In a possible implementation, the association information of the target includes the first distance and the first speed of the target. The determining the association information of the target based on the first distance-Doppler spectrum and the second distance-Doppler spectrum includes: detecting the first distance-Doppler spectrum, to obtain a second distance and a second speed of the target; detecting the second distance-Doppler spectrum, to obtain a third distance and a third speed of the target; fusing the second distance and the third distance, to obtain the first distance of the target; and fusing the second speed and the third speed, to obtain the first speed of the target.

In a possible implementation, the first pulse repetition interval is different from the second pulse repetition interval. The method further includes: obtaining a phase difference of the target based on the first distance-Doppler spectrum and the second distance-Doppler spectrum; obtaining a fourth speed of the target based on the phase difference; and determining a fifth speed of the target based on the first speed and the fourth speed of the target.

According to a fourth aspect, this application provides a chip, including at least one processor and an interface circuit. Further, optionally, the chip may further include a memory. The processor is configured to execute a computer program or instructions stored in the memory, so that the chip performs the method in the second aspect or any possible implementation of the second aspect.

According to a fifth aspect, this application provides a computer-readable storage medium. The computer-readable storage medium stores a computer program or instructions. When the computer program or the instructions are executed by a detection apparatus, the detection apparatus is enabled to perform the method in the second aspect or any possible implementation of the second aspect.

According to a sixth aspect, this application provides a computer program product. The computer program product includes a computer program or instructions. When the computer program or the instructions are executed by a detection apparatus, the detection apparatus is enabled to perform the method in the second aspect or any possible implementation of the second aspect.

For technical effects that can be achieved in any one of the second aspect to the sixth aspect, refer to descriptions of beneficial effects in the first aspect. Details are not described herein again.

**BRIEF DESCRIPTION OF DRAWINGS**

FIG. 1a is a schematic diagram of a pulse according to this application;
FIG. 1b is a schematic diagram of another pulse according to this application;
FIG. 2a is a schematic diagram of a location relationship between a radar and a vehicle according to this application;
FIG. 2b is a schematic diagram of a possible application scenario according to this application;
FIG. 3a is a schematic diagram of an FMCW signal according to this application;
FIG. 3b is a schematic diagram of a step FMCW signal according to this application;
FIG. 3c is a schematic diagram of another step FMCW signal according to this application;
FIG. 3d is a schematic simulation diagram of a corresponding distance-Doppler spectrum when a radar uses a step FMCW signal according to this application;
FIG. 3e is another schematic simulation diagram of a corresponding distance-Doppler spectrum when a radar uses a step FMCW signal according to this application;
FIG. 4 is a schematic diagram of a structure of a detection apparatus according to this application;
FIG. 5a is a schematic diagram of a relationship between a first signal and a second signal according to this application;
FIG. 5b is another schematic diagram in which a first signal and a second signal are alternately distributed according to this application;
FIG. 5c is still another schematic diagram in which a first signal and a second signal are alternately distributed according to this application;
FIG. 5d is still another schematic diagram in which a first signal and a second signal are alternately distributed according to this application;
FIG. 5e is still another schematic diagram in which a first signal and a second signal are alternately distributed according to this application;
FIG. 5f is still another schematic diagram in which a first signal and a second signal are alternately distributed according to this application;
FIG. 6a is a schematic diagram of distribution of a first signal group and a second signal group according to this application;
FIG. 6b is another schematic diagram of distribution of a first signal group and a second signal group according to this application;
FIG. 7a is a schematic diagram of a relationship between a first pulse repetition interval and a second pulse repetition interval according to this application;
FIG. 7b is a schematic diagram of another relationship between a first pulse repetition interval and a second pulse repetition interval according to this application;
FIG. 8a is a schematic flowchart of a signal processing method according to this application;
FIG. 8b is a schematic flowchart of a signal processing method according to this application;
FIG. 9 is a schematic diagram of a distance-Doppler spectrum according to this application;
FIG. 10 is a schematic flowchart of another signal processing method according to this application;
FIG. 11 is a schematic diagram of a structure of another detection apparatus according to this application;
FIG. 12 is a schematic diagram of a structure of a terminal device according to this application; and
FIG. 13 is a schematic flowchart of still another signal processing method according to this application.

**DESCRIPTION OF EMBODIMENTS**

The following describes in detail embodiments of this application with reference to accompanying drawings.

The following describes some terms in this application. It should be noted that these explanations are intended for ease of understanding by a person skilled in the art, but do not constitute a limitation on the protection scope claimed in this application.

1. Frequency band

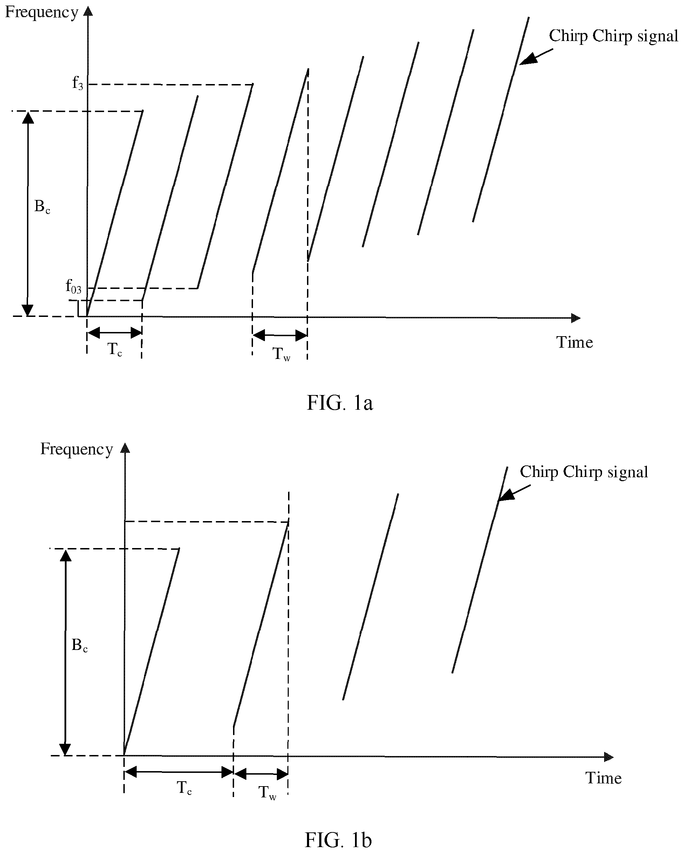

The frequency band refers to a spectrum resource occupied by a signal, and may be described by using an initial frequency (or referred to as a lowest frequency) and a frequency band width ($B_c$) of the occupied spectrum resource, or may be described by using a center frequency and a frequency band width of the occupied spectrum resource. For a segment of continuous spectrum resources, the frequency band width refers to a difference between a highest frequency and a lowest frequency of the segment of spectrum resources. Refer to FIG. 1a. An example in which frequency band widths of all frequency bands are the same is used. A third frequency band is used as an example. A start frequency of the third frequency band is $f_{03}$, and a highest frequency of the third frequency band is fs.

2. Chirp (chirp)

The chirp is a term related to a pulse encoding technology in a communication technology, and refers to a phenomenon in which a carrier frequency of a pulse linearly increases within a pulse repetition interval when the pulse is encoded. Generally, a phenomenon that a center wavelength deviates during pulse transmission is called a "chirp". A single pulse may be referred to as a linear frequency modulation signal (namely, a chirp signal). Refer to FIG. 1a. One frequency band is one chirp signal.

3. Pulse repetition interval (pulse repetition interval, PRI)

The pulse repetition interval is also referred to as a pulse repetition period (pulse repetition period), and is a time interval between an $i^{th}$ pulse and an $(i+1)^{th}$ pulse (namely, two adjacent pulses). Alternatively, the pulse repetition interval may be understood as duration between start moments of two adjacent pulses. The pulse repetition interval includes pulse duration and idle duration (the idle duration may be 0) between an end moment of the $i^{th}$ pulse and a start moment of the $(i+1)^{th}$ pulse. The pulse duration is also referred to as a pulse width (pulse width), and is duration of actually transmitting a pulse in a pulse repetition interval. For details, refer to pulse duration $T_w$ in FIG. 1a. Generally, the pulse duration $T_w$ is less than or equal to a pulse repetition interval $T_c$. Specifically, refer to FIG. 1a. If the idle duration between the end moment of the $i^{th}$ pulse and the start moment of the $(i+1)^{th}$ pulse is equal to 0, the pulse duration $T_w$ is equal to the pulse repetition interval $T_c$. Refer to FIG. 1b. If the idle duration between the end moment of the $i^{th}$ pulse and the start moment of the $(i+1)^{th}$ pulse is greater than 0, the pulse duration $T_w$ is less than the pulse repetition interval $T_c$.

4. Frequency step size

The frequency step size $\Delta f$ may also be referred to as a step bandwidth, and may measure a frequency offset between two adjacent pulses (for example, an $(m+1)^{th}$ pulse and an $m^{th}$ pulse). Specifically, start frequencies of the two adjacent pulses may be used to determine the frequency offset between the two adjacent pulses. Refer to FIG. 1a. For example, start frequencies of two adjacent pulses are used to determine a frequency offset between the two adjacent pulses. An offset between a start frequency of a first chirp signal and a start frequency of a second chirp signal is $\Delta f1$. It may be understood that, if all pulse widths are the same, highest frequencies of the two adjacent pulses may alternatively be used to determine the frequency offset between the two adjacent pulses, or center frequencies of the two adjacent pulses may be used to determine the frequency offset between the two adjacent pulses.

5. Non-coherent accumulation

Because energy of a single pulse signal or a single chirp signal is limited, generally, a single echo signal (or referred to as an echo pulse or a receive pulse) is not used to detect a decision, but a plurality of echo signals need to be processed, to increase a signal-to-noise ratio. This processing method based on a plurality of echo signals is referred to as accumulation. The accumulation may be divided into coherent accumulation and non-coherent accumulation. In the coherent accumulation, amplitudes of echo signals are directly superimposed by using a coherence relationship between the echo signals. The non-coherent accumulation is performed after an envelope of an echo signal is obtained. Information of a complex signal (namely, a complex-number signal in the echo signal) is discarded, only a modulus value is retained, and there is no strict phase relationship. With reference to the following Formula 4, to perform a modulo operation on a complex number is to perform non-coherent accumulation, and to perform direct superposition on complex numbers is to perform coherent accumulation.

6. Distance resolution

The distance resolution is a resolution in a distance dimension, and specifically refers to a minimum distance between two targets that can be identified by a radar. A pulse is used as an example. When a back edge (falling edge) of a pulse of a closer target coincides with a front edge (rising edge) of a pulse of a farther target, a distance between the two targets serves as a distinguishable limit. In this case, the distance between the two targets is the distance resolution. The distance resolution is related to a bandwidth of a transmit signal of the radar. For details, refer to the following Formula 1:

$$\rho_r = c/(2B_e) \quad \text{Formula 1.}$$

In Formula 1, $\rho_r$ indicates a distance resolution of the radar, $B_e$ indicates a total bandwidth of the transmit signal of the radar, c is a speed of light, and a smaller $\rho_r$ indicates a higher distance resolution of the radar. It can be learned from Formula 1 that a larger total bandwidth $B_e$ of the transmit signal indicates a higher distance resolution of the radar.

7. Distance-speed coupling

Because a Doppler frequency may be used to represent a speed of a target, the distance-speed coupling is also referred to as distance-Doppler coupling. When two-dimensional FFT is used to process an echo signal (namely, a step FMCW signal), a distance and the speed of the target are determined by using frequency values in two dimensions. After frequency mixing is performed on the step FMCW echo signal, there is a term of multiplying a speed by a distance, that is, distance-speed coupling occurs. In this way, frequencies measured in the two dimensions cannot uniquely determine the distance and speed of the target, that is, the distance-speed coupling occurs.

8. Analog-to-digital converter (analog-to-digital converter, ADC) sampling rate

The ADC sampling rate is also referred to as an ADC rate, and usually refers to a quantity of signals collected by an ADC per second. For example, 1 kilohertz (KHz)/second (s) indicates that the ADC can collect 1K points within 1s. It may be understood that a higher ADC sampling rate indicates a larger quantity of collected points and a higher degree of signal restoration.

9. Fast time and slow time

The fast time is used to sample a single chirp signal. A reciprocal of the ADC sampling rate is a sampling interval. A frequency band width of the transmit signal of the radar is $B_c$ (refer to FIG. 1a), and a front edge corresponds to a moment t=0. For example, the radar receives an echo signal in a distance interval from Ri to $R_2$. Sampling is performed at a moment $t_1=2R_1/c$ after pulse transmission, and is ended at a moment $t_2+\tau=2R_2/c+\tau$, to generate L samples. This is considered as fast time sampling, to obtain L distance units.

The radar transmits continuous pulse sequences (namely, continuous chirp signals). Generally, M chirp signals are used as one frame to be processed. A dimension in which a sampling point in a single chirp signal is located is a fast time dimension (or referred to as a distance dimension or a first dimension), and a dimension in which a quantity (or referred to as a chirp signal number) of chirp signals is located is a slow time dimension (or referred to as a Doppler dimension, a speed dimension, or a second dimension).

It may be understood that one pulse signal described in this application may be one chirp chirp signal.

The foregoing describes some terms in this application, and the following describes possible application scenarios in this application.

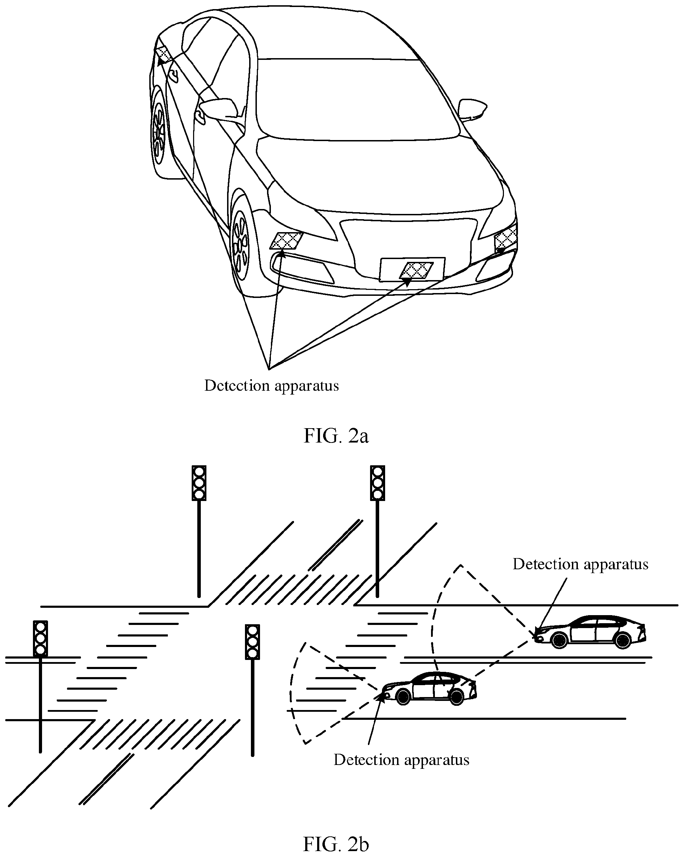

In a possible application scenario, a detection apparatus in this application may be installed in a transport tool, and may be specifically installed at each location of the transport tool. For example, the detection apparatus may be installed in any one or more of the four directions: the front, the rear, the left, and the right of the transport tool, to capture surrounding environment information of the transport tool. Refer to FIG. 2a. For example, a vehicle is used as the transport tool, a radar is used as the detection apparatus, and the radar is installed in six directions of the vehicle: a front side, a front left side, a front right side, a rear left side, a rear side (not shown in FIG. 2a), and a rear right side (not shown in FIG. 2a).

FIG. 2b is a schematic diagram of a possible application scenario according to this application. The detection apparatus may sense a sector region shown in a dashed-line box. The sector region may be referred to as a detection region of the detection apparatus. The detection apparatus may obtain, in real time or periodically, longitude and latitude, a speed, or an orientation of the vehicle, or information (for example, a distance of the target, a moving speed of the target, or a posture of the target) about a target (for example, another surrounding vehicle or an obstacle) within a specific range. The detection apparatus or the vehicle may determine a location of the vehicle based on the obtained information, and may perform path planning or the like. For example, the location of the vehicle is determined through the longitude and the latitude. Alternatively, a driving direction and a destination of the vehicle in a future period of time are determined through the speed and the orientation. Alternatively, a quantity of obstacles, density of the obstacles, and the like are determined through the distance to the surrounding object, where the obstacles are around the vehicle. Further, optionally, in combination of a function of an advanced driving assistant system (advanced driving assistant system, ADAS), assisted driving, autonomous driving, or the like of the vehicle may be implemented. It should be understood that a principle of detecting a target by the detection apparatus is as follows: The detection apparatus transmits a signal in a specific direction; if the target exists in a detection region of the detection apparatus, the target may reflect the transmit signal back to the detection apparatus (a reflected signal may be referred to as an echo signal); and then, the detection apparatus determines the information about the target based on the echo signal.

It should be noted that the foregoing application scenario is merely an example. The detection apparatus provided in this application may be further applied to a plurality of other possible scenarios, and is not limited to the foregoing example scenario. For example, the detection apparatus may alternatively be installed on an unmanned aerial vehicle as an airborne detection apparatus. For another example, the detection apparatus may alternatively be installed on a road side unit (road side unit, RSU) as a road side traffic detection apparatus, to implement intelligent vehicle-to-infrastructure cooperative communication and the like. For another example, the detection apparatus may be installed on an automated guided vehicle (automated guided vehicle, AGV). The AGV refers to a transportation vehicle that is equipped with an automated navigation apparatus like an electromagnetic or optical apparatus, can drive along a specified navigation path, and has security protection and various moving functions.

The foregoing application scenario may be applied to the fields such as self driving, autonomous driving, assisted driving, intelligent driving, connected vehicles, security surveillance, remote interaction, artificial intelligence, or surveying and mapping.

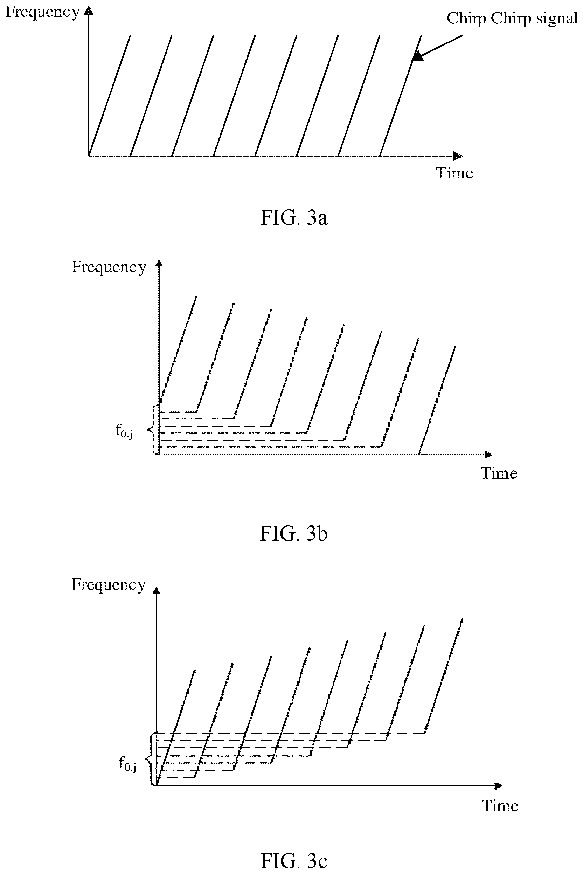

Based on the foregoing content, an example in which the detection apparatus is a radar and the radar transmits an FMCW signal is used. The radar may detect a surrounding environment (for example, the target) by using the transmitted FMCW signal. FIG. 3a is a schematic diagram of an FMCW signal according to this application. A frequency of the FMCW signal changes linearly with time. Each linear change segment may be referred to as a chirp signal (namely, a pulse). A plurality of (for example, 256 or 512) chirp signals form one frame of transmit signal in a time sequence, where one frame corresponds to one frame period.

Based on Formula 1, the distance resolution of the radar can be improved by increasing the total bandwidth $B_e$ for the radar to transmit one frame of transmit signal. The radar transmits a step FMCW signal. As shown in FIG. 3b and FIG. 3c, a start frequency $f_{0,j}$ of each chirp signal changes linearly. A total bandwidth of one frame of transmit signal is equal to a sum of a bandwidth of each chirp signal and a frequency step size. Therefore, the total bandwidth $B_e$ of one frame of transmit signal can be increased by using the step FMCW signal. The step FMCW signal may be represented by using Formula 2:

$$ u_{SF}(k, j) = \exp\left\{ i2\pi \left( f_{c,j}(kT - (j-1)T_c) + \frac{B_c}{2KT}(kT)^2 \right) \right\} \text{ Formula 2,} $$

where

$f_{c,j}$ is a start frequency of each chirp signal, T is an ADC sampling time interval, $B_c$ is a bandwidth of a single chirp signal, $T_c$ is a pulse repetition interval of the chirp signal, k is a fast time (in the single chirp signal) sampling index, K is a quantity of fast time sampling points, and j is a slow time (between chirp signals) index.

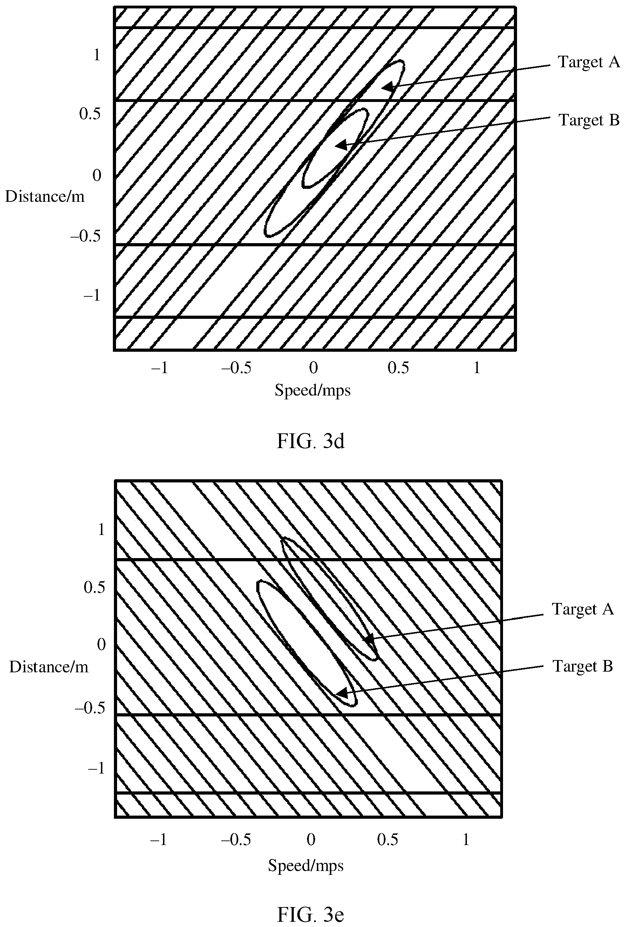

When the radar uses the step FMCW signal, a distance-Doppler coupling problem is introduced. With reference to FIG. 3d, a schematic simulation diagram of a corresponding distance-Doppler spectrum when the radar uses the step FMCW signal is provided. The target is in a shape of a tilted ellipse on the distance-Doppler spectrum. In FIG. 3d, a target A and a target B overlap. Consequently, the radar can detect only one target. This causes a problem of missing detection of a target.

In view of the foregoing problem, this application provides a detection apparatus. The detection apparatus transmits two groups of signals having different frequency step directions, so that missing detection of a target caused by distance-speed coupling can be reduced or eliminated when a distance resolution of the detection apparatus is improved.

Based on the foregoing content, the following specifically describes the detection apparatus provided in this application with reference to the accompanying drawings.

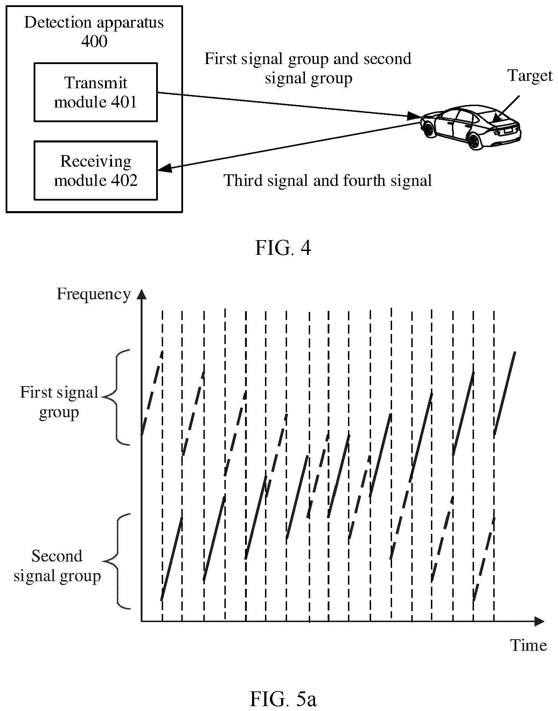

FIG. 4 is a schematic diagram of a structure of a detection apparatus according to this application. A detection apparatus 400 may include a transmit module 401 and a receiving module 402. The transmit module 401 is configured to transmit a first signal group and a second signal group, where M first signals included in the first signal group and N second signals included in the second signal group are alternately distributed. The receiving module 402 is configured to receive a third signal group and a fourth signal group, where the third signal group and the fourth signal group are used to determine association information of a target, a third signal included in the third signal group is an echo signal obtained after the first signal is reflected by the target, and a fourth signal included in the fourth signal group is an echo signal obtained after the second signal is reflected by the target.

Further, optionally, the association information of the target is information related to the target, and may be understood as follows: When the association information of the target includes a speed, a speed 1 of the target may be obtained based on the third signal group, a speed 2 of the target may be obtained based on the fourth signal group, and a first speed of the target may be further obtained through association based on the speed 1 and the speed 2. Similarly, when the association information of the target includes a distance, a distance 1 of the target may be obtained based on the third signal group, a distance 2 of the target may be obtained based on the fourth signal group, and a first distance of the target may be further obtained based on the distance 1 and the distance 2.

The M first signals may be the same or different, and the N second signals may be the same or different. Further, in some embodiments, the transmit module may first transmit the first signal group and then transmit the second signal group, or may first transmit the second signal group and then transmit the first signal group.

In addition, the first signal in the first signal group and the second signal in the second signal group are collectively referred to as a first transmit signal. Further, optionally, M may be equal to N, or M and N may be unequal. It should be noted that the first signal group and the second signal group form one frame of first transmit signal. In other words, the first transmit signal includes the first signal group and the second signal group.

In a possible implementation, frequency step directions of the first signal group and the second signal group are different. The frequency step direction may include but is not limited to an upward step or a downward step. For example, the first signal group uses the downward step, and the second signal group uses the upward step. For another example, the first signal group uses the upward step, and the second signal group uses the downward step. The first signal group may alternatively be referred to as an odd group, and the second signal may alternatively be referred to as an even group; or the first signal group may alternatively be referred to as an even group, and the second signal group may alternatively be referred to as an odd group.

Based on the foregoing detection apparatus, two groups having different frequency step directions, namely, the first signal group and the second signal group, are transmitted. Targets that are missed in detection performed by the two groups of signals having different frequency step directions have different distance-speed coupling characteristics. To be specific, distance-speed coupling causes missing detection of the target in one frequency step direction, but does not causes missing detection of the target in another frequency step direction. Therefore, missing detection of the target caused by the distance-speed coupling can be reduced or eliminated by transmitting the two groups having different frequency step directions, namely, the first signal group and the second signal group. Further, a frequency step is used for the first signal group and the second signal group. Therefore, a total bandwidth may be increased, so that a distance resolution of the detection apparatus can be improved.

It is found through simulation that when a frequency step direction used by the radar is the downward step, if the first transmit signal transmitted by the radar is the first signal group, the target A and the target B overlap in a simulation result of the distance-Doppler spectrum. Reference may be made to FIG. 3d. When a frequency step direction used by the radar is the upward step, if the first transmit signal transmitted by the radar is the second signal group, the target A and the target B are separated in a simulation result of the distance-Doppler spectrum. Reference may be made to FIG. 3e.

The following separately describes the functional modules shown in FIG. 4, to provide an example of a specific implementation solution. For ease of description, no digital identifier is added to a transmit module and a receive module in the following.

1. Transmit module

In a possible implementation, the transmit module is configured to transmit a first signal group and a second signal group, where M first signals included in the first signal group and N second signals included in the second signal group are alternately distributed. In other words, the M first signals and the N second signals are alternately distributed in time domain (or time).

The following shows examples of three possible implementations in which the transmit module transmits the first signal group and the second signal group. In a possible implementation, the transmit module may first transmit the first signal group and then transmit the second signal group, or may first transmit the second signal group and then transmit the first signal group. This is not limited in this application. In the following description, an example in which the transmit module first transmits the first signal and then transmits the second signal is used.

Implementation 1: The first signal and the second signal are alternately distributed one by one.

Alternatively, it may be understood as follows: One first signal and one second signal are alternately distributed. FIG. 5a is a schematic diagram in which the first signal and the second signal are alternately distributed according to this application. In this example, the transmit module alternately transmits the first signal and the second signal. Specifically, the transmit module may first transmit a 1st first signal in the first signal group, and then transmit a 1st second signal in the second signal group, where a start moment of the 1st second signal is not earlier than an end moment of the 1st first signal.

Then, the transmit module transmits a $2^{nd}$ first signal in the first signal group, and then transmits a $2^{nd}$ second signal in the second signal group, where a start moment of the $2^{nd}$ first signal is not earlier than an end moment of the $1^{st}$ second signal, and a start moment of the $2^{nd}$ second signal is not earlier than an end moment of the $2^{nd}$ first signal. The rest may be deduced by analogy.

Implementation 2: The first signal group and the second signal group are alternately distributed.

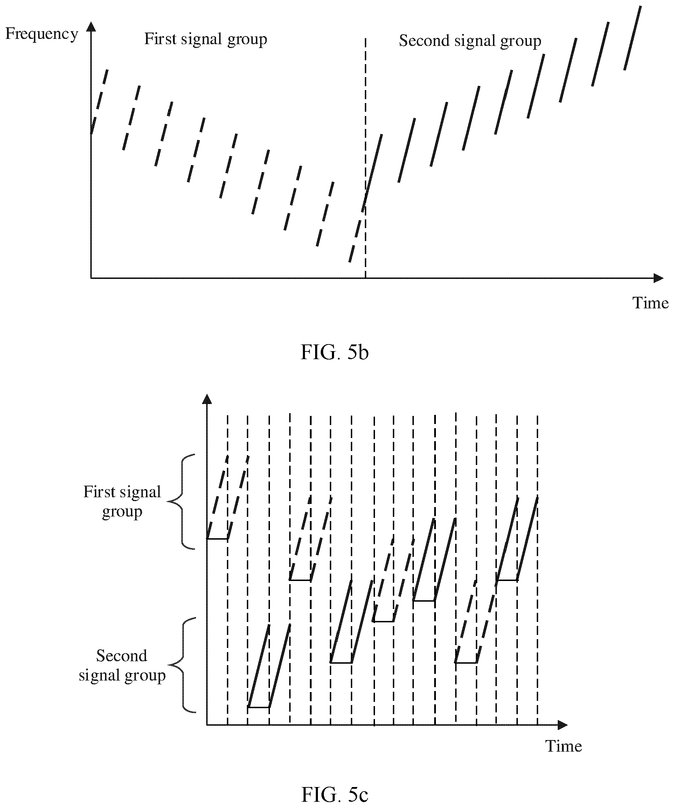

FIG. 5b is another schematic diagram in which the first signal and the second signal are alternately distributed according to this application. In this example, the transmit module first transmits the M first signals in the first signal group, and then transmits the N second signals in the second signal group. In other words, a start moment of a $1^{st}$ second signal in the second signal group transmitted by the transmit module is not earlier than an end moment of an $M^{th}$ first signal (namely, a last first signal) in the first signal group. The rest may be deduced by analogy.

It should be noted that a start frequency of the $1^{st}$ second signal in the second signal group may be greater than, equal to, or less than a highest frequency of the last first signal in the first signal group. Alternatively, a start frequency of the $1^{st}$ second signal in the second signal group may be greater than, equal to, or less than a lowest frequency of the last first signal in the first signal group.

Implementation 3: $p_i$ continuous first signals and $q_i$ continuous second signals are alternately distributed.

$p_i$ is an integer greater than 1 and $q_i$ is a positive integer, or $p_i$ is a positive integer and $q_i$ is an integer greater than 1, where i is a positive integer. Alternatively, it may be understood as follows: At least one of $p_i$ and $q_i$ is an integer greater than 1. Further, start frequencies of the $p_i$ continuous first signals are the same, and start frequencies of the $q_i$ continuous second signals are also the same. For example, start frequencies of pi first signals are the same, start frequencies of $p_2$ first signals are the same, and the rest may be deduced by analogy. Start frequencies of $q_1$ second signals are also the same, start frequencies of $q_2$ second signals are also the same, and the rest may be deduced by analogy.

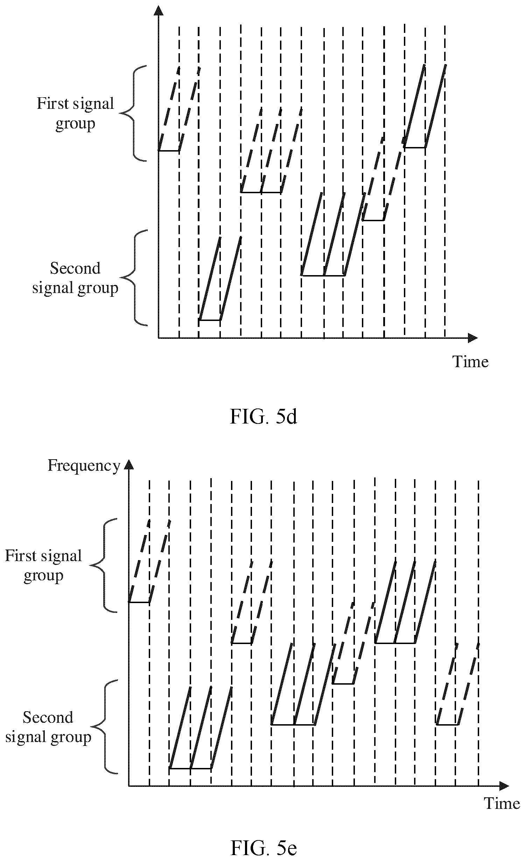

In a possible implementation, $p_i$ is the same as $q_i$. FIG. 5c is still another schematic diagram in which the first signal and the second signal are alternately distributed according to this application. In this example, the transmit module first continuously transmits the $p_1$ first signals in the first signal group, and then continuously transmits the $q_1$ second signals in the second signal group, where a start moment of a $1^{st}$ second signal in the $q_1$ second signals is not earlier than an end moment of a last first signal in the $p_1$ first signals. Then, the transmit module continuously transmits the $p_2$ first signals, and then continuously transmits the $q_2$ second signals, where a start moment of a $1^{st}$ second signal in the $q_2$ second signals is not earlier than an end moment of a last first signal in the $p_2$ first signals, and a start moment of a $1^{st}$ first signal in the $p_2$ first signals is not earlier than an end moment of a last second signal in the $q_1$ second signals. The rest may be deduced by analogy. In FIG. 5c, $p_1=p_2=...=2$ is used as an example, and $q_1=q_2...=2$ is used as an example. It should be noted that pi, $p_2$, $p_3$, and the like may alternatively be different, and $q_1$, $q_2$, $q_3$, and the like may alternatively be different. Refer to FIG. 5d.

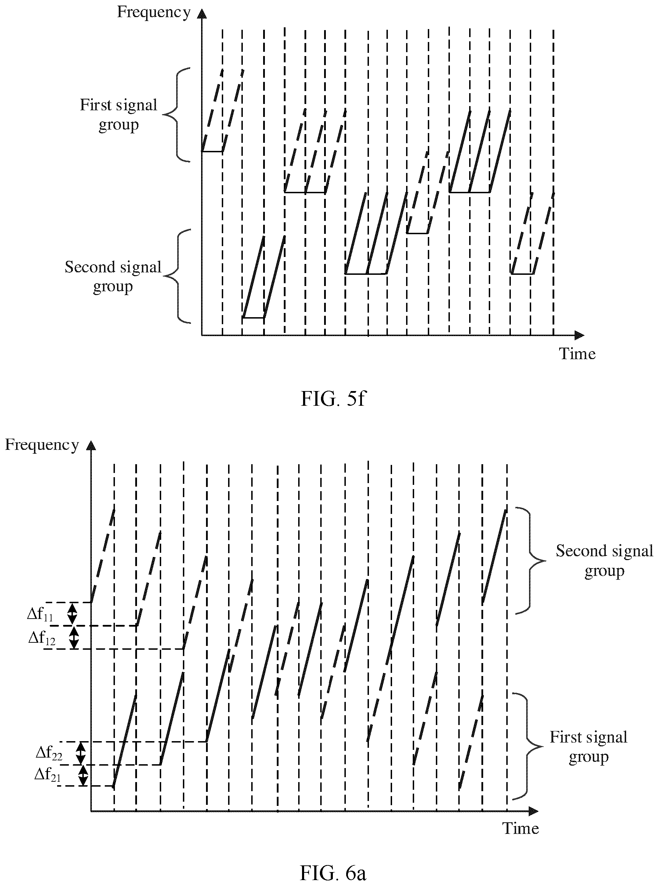

In another possible implementation, $p_i$ is different from $q_i$. FIG. 5e is still another schematic diagram in which the first signal and the second signal are alternately distributed according to this application. In this example, the transmit module first continuously transmits the $p_1$ first signals in the first signal group, and then continuously transmits the $q_1$ second signals in the second signal group, where a start moment of a $1^{st}$ second signal in the $q_1$ second signals is not earlier than an end moment of a last first signal in the $p_1$ first signals. Then, the transmit module continuously transmits the $p_2$ first signals, and then continuously transmits the $q_2$ second signals, where a start moment of a $1^{st}$ second signal in the $q_2$ second signals is not earlier than an end moment of a last first signal in the $p_2$ first signals, and a start moment of a $1^{st}$ first signal in the $p_2$ first signals is not earlier than an end moment of a last second signal in the $q_1$ second signals. The rest may be deduced by analogy. In FIG. 5e, $p_1=p_2=...=2$ is used as an example, and $q_1=q_2...=3$ is used as an example. It should be noted that pi, $p_2$, $p_3$, and the like may alternatively be different, and $q_1$, $q_2$, $q_3$, and the like may alternatively be different. Refer to FIG. 5f.

It should be noted that start frequencies of the $p_i$ continuous first signals may alternatively be different, and/or start frequencies of the $q_i$ continuous second signals may alternatively be different.

Based on the foregoing content, the following separately describes a first frequency step size of the first signal group and a second frequency step size of the second signal group.

In a possible implementation, a frequency offset between first signals in the first signal group is referred to as the first frequency step size, and a frequency offset between second signals in the second signal group is referred to as the second frequency step size. Specifically, the first frequency step size is a frequency offset between an $(m+k_1)^{th}$ first signal and an $m^{th}$ first signal in the first signal group, $k_1$ is a positive integer, and m is any integer in [1, M], that is, the $m^{th}$ first signal is first signal in the first signal group. The second frequency step size is a frequency offset between an $(n+k_2)^{th}$ second signal and an $n^{th}$ second signal in the second signal group, $k_2$ is a positive integer, and n is any integer in [1, N], that is, the $n^{th}$ second signal in any second signal in the second signal group.

With reference to the foregoing Implementation 1, a frequency offset between an $(m+1)^{th}$ first signal and the $m^{th}$ first signal in the first signal group is referred to as the first frequency step size, and a frequency offset between an $(n+1)^{th}$ second signal and the $n^{th}$ second signal in the second signal group is referred to as the second frequency step size, where both m and n are positive integers. In other words, based on the foregoing Implementation 1, both $k_1$ and $k_2$ are 1. With

reference to FIG. 6a, an absolute value $\Delta f_{11}$ of a $1^{st}$ first frequency step size is a frequency offset between a $2^{nd}$ first signal and a $1^{st}$ first signal in the first signal group, and an absolute value $\Delta f_{21}$ of a $1^{st}$ second frequency step size is a frequency offset between a $2^{nd}$ second signal and a $1^{st}$ second signal in the second signal group. An absolute value $\Delta f_{12}$ of a $2^{nd}$ first frequency step size is a frequency offset between a $3^{rd}$ first signal and the $2^{nd}$ first signal in the first signal group, and an absolute value $\Delta f_{22}$ of a $2^{nd}$ second frequency step size is a frequency offset between a $3^{rd}$ second signal and the $2^{nd}$ second signal in the second signal group. The rest may be deduced by analogy.

With reference to the foregoing Implementation 2, a frequency offset between an $(m+1)^{th}$ first signal and the $m^{th}$ first signal in the first signal group is referred to as the first frequency step size, and a frequency offset between an $(n+1)^{th}$ second signal and the $n^{th}$ second signal in the second signal group is referred to as the second frequency step size, where both m and n are positive integers. In other words, based on the foregoing Implementation 2, both $k_1$ and $k_2$ may be 1.

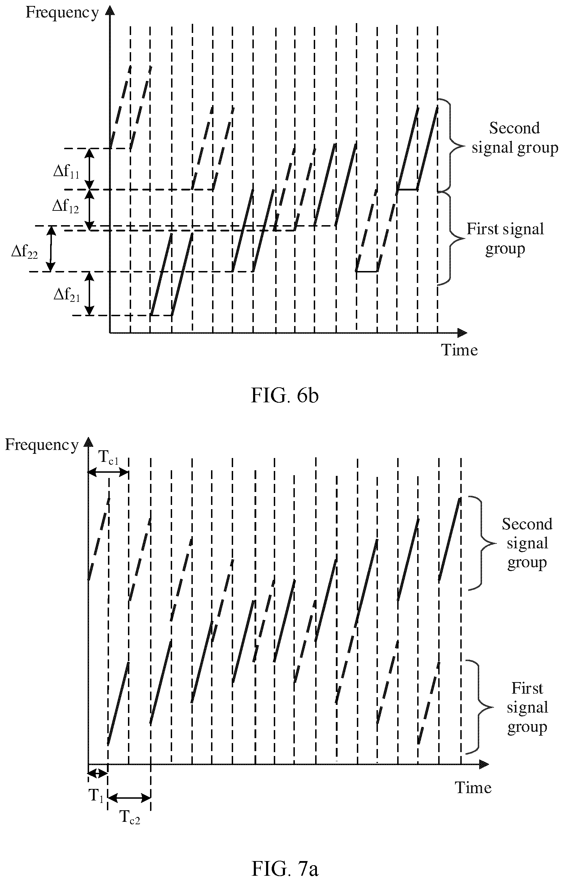

With reference to the foregoing Implementation 3, a frequency offset between an $(m+p_i)^{th}$ first signal and the $m^{th}$ first signal in the first signal group is referred to as the first frequency step size, and a frequency offset between an $(n+q_i)^{th}$ second signal and the $n^{th}$ second signal in the second signal group is referred to as the second frequency step size. Alternatively, it may be understood as follows: Based on the foregoing Implementation 2, $ki=pi$, and $k_2=q_i$. With reference to FIG. 6b, the absolute value $\Delta f_{11}$ of the $1^{st}$ first frequency step size is a frequency offset between a $(1+2)^{rd}$ first signal and the $1^{st}$ first signal in the first signal group, and the absolute value $\Delta f_{21}$ of the $1^{st}$ second frequency step size is a frequency offset between a $(1+2)^{rd}$ second signal and the $1^{st}$ second signal in the second signal group. The absolute value $\Delta f_{12}$ of the $2^{nd}$ first frequency step size is a frequency offset between a $(3+2)^{th}$ first signal and the $3^{rd}$ first signal in the first signal group, and the absolute value $\Delta f_{22}$ of the $2^{nd}$ second frequency step size is a frequency offset between a $(3+2)^{th}$ second signal and the $3^{rd}$ second signal in the second signal group. The rest may be deduced by analogy.

In a possible implementation, an absolute value of a difference between any two first frequency step sizes in the first signal group is not greater than (namely, less than or equal to) a second threshold. For example, the second threshold is greater than or equal to 0 and less than 5 gigahertz (GHz) (or a total bandwidth supported by a radar system). For example, the second threshold is 500 hertz (Hz), 1 kilohertz (KHz), or 1 megahertz (MHz).

In a specific implementation, the absolute value of the difference between the any two first frequency step sizes in the first signal group is equal to 0. In other words, the any two first frequency step sizes in the first signal group are the same, and both may be $\Delta f_{11}$. In another specific implementation, the any two first frequency step sizes in the first signal group may be different, and the absolute value of the difference between the any two first frequency step sizes is less than or equal to the second threshold. Further, optionally, an average value of the first frequency step sizes may be $\Delta f_{11}$. The first frequency step size changes randomly in the first signal group. This helps prevent the first signal from being continuously interfered with by another external signal, so that an anti-interference capability of the first signal group and/or a corresponding third signal group can be improved.

In a possible implementation, an absolute value of a difference between any two second frequency step sizes in the second signal group is not greater than (namely, less than or equal to) a third threshold. For example, the third threshold is greater than 0 and less than 5 GHz (or the total bandwidth supported by the radar system). For example, the third threshold may be 500 Hz, 1 KHz, or 1 MHz. The third threshold may be the same as or different from the second threshold. This is not limited in this application. In a possible implementation, the absolute value of the difference between the any two second frequency step sizes in the second signal group is equal to 0, and both may be $\Delta f_{21}$. In another possible implementation, the any two second frequency step sizes in the second signal group may be different, and the absolute value of the difference between the any two second frequency step sizes is less than or equal to the third threshold. Further, optionally, an average value of the second frequency step sizes may be $\Delta f_{21}$. The second frequency step size changes randomly in the second signal group. This helps prevent the second signal from being continuously interfered with by another external signal, so that an anti-interference capability of the second signal group and/or a corresponding fourth signal group can be improved.

Based on the foregoing content, the following describes a relationship between the first frequency step size and the second frequency step size.

In this application, an absolute value of a difference between an absolute value of the first frequency step size and an absolute value of a corresponding second frequency step size is not greater than the first threshold. The $1^{st}$ first frequency step size corresponds to the $1^{st}$ second frequency step size, the $2^{nd}$ first frequency step size corresponds to the $2^{nd}$ second frequency step size, and the rest may be deduced by analogy. The first threshold is greater than 0 and less than 5 GHz (or the total bandwidth supported by the radar system). For example, the first threshold may be 500 Hz, 1 KHz, or 1 MHz. In a possible implementation, the absolute value of the difference between the absolute value of the first frequency step size and the absolute value of the corresponding second frequency step size is equal to 0. In other words, the absolute value of the first frequency step size is equal to the absolute value of the second frequency step size. The following provides detailed descriptions in cases.

Case 1: The absolute value of the first frequency step size is the same as the absolute value of the corresponding second frequency step size.

For example, an absolute value of a difference between the absolute value of the $1^{st}$ first frequency step size and the absolute value of the corresponding 1st second frequency step size is equal to A, and an absolute value of a difference between the absolute value of the 2nd first frequency step size and the absolute value of the corresponding 2nd second frequency step size is also equal to A. The rest may be deduced by analogy.

Based on Case 1, there may be the following Case 1.1 and Case 1.2.

Case 1.1: Any two first frequency step sizes in the first signal group are the same, and any two second frequency step sizes in the second signal group are the same.

For example, any first frequency step size in the first signal group is $\Delta f_{11}$. Any second frequency step size in the second signal group is $\Delta f_{21}$.

Case 1.2: There are at least two different first frequency step sizes in the first signal group, and there are at least two different second frequency step sizes in the second signal group.

For example, the first frequency step sizes in the first signal group are respectively $\Delta f_{11}$, $\Delta f_{12}$, $\Delta f_{13}$, and the like; and the second frequency step sizes in the second signal group are respectively $\Delta f_{21}$, $\Delta f_{22}$, $\Delta f_{23}$, and the like, where $\Delta f_{11}$ corresponds to $\Delta f_{21}$, and $\Delta f_{11}$ is equal to $\Delta f_{21}$; $\Delta f_{12}$ corresponds to $\Delta f_{22}$, and $\Delta f_{12}$ is equal to $\Delta f_{22}$; $\Delta f_{13}$ corresponds to $\Delta f_{23}$, and $\Delta f_{13}$ is equal to $\Delta f_{23}$; and the like.

Case 2: The absolute value of the first frequency step size is different from the absolute value of the corresponding second frequency step size.

In a possible implementation, an absolute value of a difference between the absolute value of the 1st first frequency step size and the absolute value of the corresponding 1st second frequency step size is equal to $B_1$; an absolute value of a difference between the absolute value of the 2nd first frequency step size and the absolute value of the corresponding 2nd second frequency step size is equal to $B_2$; an absolute value of a difference between an absolute value of a 3rd first frequency step size and an absolute value of a 3rd second frequency step size is equal to $B_3$; and the like. The rest may be deduced by analogy. $B_1$, $B_2$, $B_3$, and the like may be partially different, or may be different from each other. Alternatively, it may be understood as follows: At least two of $B_1$, $B_2$, $B_3$, and the like are different. Alternatively, it may be understood as follows: Absolute values of differences between absolute values of some first frequency step sizes and absolute values of corresponding second frequency step sizes are the same, and absolute values of differences between absolute values of some first frequency step sizes and absolute values of corresponding second frequency step sizes are different; or absolute values of differences between absolute values of the first frequency step sizes and absolute values of corresponding second frequency step sizes are different from each other; and absolute values of differences between absolute values of different first frequency step sizes and absolute values of corresponding second frequency step sizes are not greater than the first threshold.

It should be noted that, that the first frequency step size is different from the second frequency step size may be understood as follows: A frequency jitter occurs, or transmission is performed in a random frequency step size manner.

Based on the foregoing content, the following describes a relationship between a first pulse repetition interval and a corresponding second pulse repetition interval in cases.

In a possible implementation, the first pulse repetition interval is a time interval between an $i^{th}$ first signal and an $(i+k_1)^{th}$ first signal in the first signal group, $k_1$ is a positive integer, and i is any integer in [1, M]. The corresponding second pulse repetition interval is a time interval between a $z^{th}$ second signal and a $(z+k_2)^{th}$ second signal in the second signal group, $k_2$ is a positive integer, and z is any integer in [1, N]. For example, the first pulse repetition interval is a time interval between the $i^{th}$ first signal and an $(i+1)^{th}$ first signal in the first signal group, and the corresponding second pulse repetition interval is a time interval between an $i^{th}$ second signal and an $(i+1)^{th}$ second signal in the second signal group, where i is a positive integer. Alternatively, it may be understood as follows: The $i^{th}$ first signal is a first signal in the first signal group, and the $i^{th}$ second signal is a second signal in the second signal group. For example, a first pulse repetition interval of a 1st first signal corresponds to a second pulse repetition interval of a 1st second signal, a first pulse repetition interval of a 2nd second signal corresponds to a second pulse repetition interval of a 2nd second signal, and the rest may be deduced by analogy.

Case A: The first pulse repetition interval is the same as the corresponding second pulse repetition interval.

In a possible implementation, the first pulse repetition interval is $T_{c1}$, and the second pulse repetition interval is $T_{c2}$, where $T_{c1}$ is equal to $T_{c2}$.

Based on Case A, there may be the following two possible cases.

Case A-1: Any two first pulse repetition intervals in the first signal group are the same, and any two second pulse repetition intervals in the second signal group are the same.

FIG. 7a is a schematic diagram of a relationship between the first pulse repetition interval and the second pulse repetition interval according to this application. All first pulse repetition intervals of the M first signals are the same, and are $T_{c1}$; and all second pulse repetition intervals of the N second signals are the same, and are $T_{c2}$, where $T_{c1}$ is equal to $T_{c2}$. It may be understood that $T_1$ represents a pulse repetition interval of a first transmit signal, where $T_1$ is less than $T_{c1}$, and $T_1$ is also less than $T_{c2}$.

Case A-2: At least two first pulse repetition intervals in the first signal group are different, and at least two second pulse repetition intervals in the second signal group are different, but the first pulse repetition interval is the same as the corresponding second pulse repetition interval.

In a possible implementation, the first pulse repetition intervals of the M first signals change linearly (for example, linearly increase or decrease), the second pulse repetition intervals of the N second signals also change linearly, and the first pulse repetition interval is the same as the corresponding second pulse repetition interval. In another possible implementation, the first pulse repetition intervals of the M first signals change randomly, the second pulse repetition intervals of the N second signals also change randomly, and the first pulse repetition interval is the same as the corresponding second pulse repetition interval.

For example, three first pulse repetition intervals and three second pulse repetition intervals are used as an example. A 1st first pulse repetition interval is different from a 2nd first pulse repetition interval, and the 2nd first pulse repetition interval is different from a 3rd first pulse repetition interval. A 1st second pulse repetition interval is different from a 2nd second pulse repetition interval, and the 2nd second pulse repetition interval is different from a 3rd second pulse repetition interval. The 1st first pulse repetition interval is the same as the corresponding 1st second pulse repetition interval, the 2nd first pulse repetition interval is the same as the corresponding 2nd second pulse repetition interval, and the 3rd first pulse repetition interval is the same as the corresponding 3rd second pulse repetition interval.

Further, if the transmit module first transmits the first signal, an end moment of a first pulse of the $i^{th}$ first signal is not later than a start moment of a second pulse of the $i^{th}$ second signal, and a start moment of the $(i+1)^{th}$ first signal is not earlier than an end moment of the $i^{th}$ second signal. If the transmit module first transmits the second signal, an end moment of the $i^{th}$ second signal is not later than a start moment of the $i^{th}$ first signal, and a start moment of the $(i+1)^{th}$ second signal is not earlier than an end moment of the $i^{th}$ first signal. The first pulse repetition intervals of the M first signals are set to change randomly, so that an anti-interference capability of the first signal can be improved. The second pulse repetition intervals of the N second signals are set to change randomly, so that an anti-interference capability of the second signal can be improved. The first signal is used as an example. It may be understood that, if the first pulse repetition intervals of the M first signals are the same, when the M first signals are interfered with by another external signal, the interference always exists. Further, a quadratic term of a chirp index j (or an index j of a chirp number) is introduced into second-dimensional FFT processing by the frequency step. Therefore, coherence of the quadratic term can be reduced or eliminated by setting the first pulse repetition intervals of the M first signals to change randomly, so that a capability of resisting nonlinearity of the first signal can be improved.

Case B: The first pulse repetition interval is different from the corresponding second pulse repetition interval.

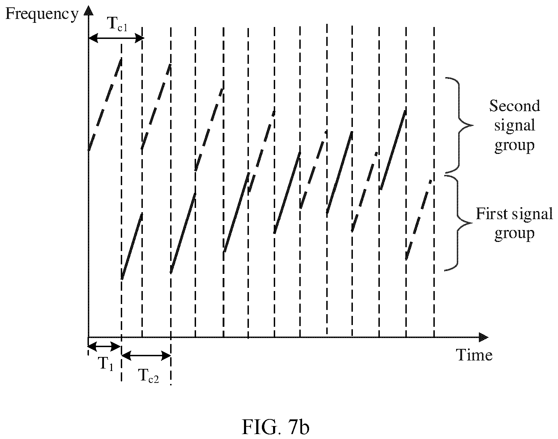

Refer to FIG. 7b. In a possible implementation, the first pulse repetition interval $T_{c1}$ of the $i^{th}$ first signal is different from the second pulse repetition interval $T_{c2}$ of the corresponding $i^{th}$ second signal. For example, $T_{c1}$ is greater than $T_{c2}$, or $T_{c1}$ is less than $T_{c2}$. In FIG. 7b, an example in which $T_{c1}$ is greater than $T_{c2}$ is used. Further, if the transmit module first transmits the first signal, an end moment of the $i^{th}$ first signal is not later than a start moment of the $i^{th}$ second signal, and a start moment of the $(i+1)^{th}$ first signal is not earlier than an end moment of the $i^{th}$ second signal. If the transmit module first transmits the second signal, an end moment of the $i^{th}$ second signal is not later than a start moment of the $i^{th}$ first signal, and a start moment of the $(i+1)^{th}$ second signal is not earlier than an end moment of the $i^{th}$ first signal.

Specifically, the first pulse repetition intervals of the M first signals may change randomly, and the second pulse repetition intervals of the N second signals may also change randomly. Alternatively, the first pulse repetition intervals of the M first signals may change linearly, and the second pulse repetition intervals of the N second signals may also change linearly. Alternatively, the first pulse repetition intervals of the M first signals may change randomly, and the second pulse repetition intervals of the N second signals may change linearly. Alternatively, the first pulse repetition intervals of the M first signals may change linearly, and the second pulse repetition intervals of the N second signals may change randomly.

In a possible implementation, frequency modulation slopes (refer to $\alpha$ in the following Formula 11) of the M first signals in the first signal group are the same, and frequency modulation slopes of the N second signals in the second signal group are also the same. Further, optionally, the frequency modulation slopes of the M first signals in the first signal group may be the same as or different from the frequency modulation slopes of the N second signals in the second signal group.

In a possible implementation, frequency band bandwidths $B_{c1}$ of the M first signals in the first signal group are the same, and frequency band bandwidths $B_{c2}$ of the N second signals in the second signal group are also the same. Further, optionally, $B_{c1}$ is also the same as $B_{c2}$.

Based on the foregoing content, the following uses an example in which the frequency step direction of the first signal group is the downward step and the frequency step direction of the second signal group is the upward step; uses an example in which the first pulse repetition interval $T_{c1}$ of the M first signals is the same as the second pulse repetition interval $T_{c2}$ of the N second signals, and a same pulse repetition interval is represented by $T_c$, that is, $T_{c1} = T_{c2} = T_c$; uses an example in which the first frequency step size is the same as the second frequency step size, and a same frequency step size is represented by $\Delta f$; uses an example in which a quantity M of the first signals included in the first signal group is the same as a quantity N of the second signals included in the second signal group (that is, M=N), and a same quantity is represented by J; uses an example in which the first signal and the second signal have a same frequency band width, and the same frequency band width is represented by $B_c$; and uses an example in which the first signal and the second signal are alternately distributed one by one (namely, the foregoing Implementation 1), to describe expressions of the first signal group and the second signal group. The first signal group may be represented by Formula 3, and the second signal group may be represented by Formula 4. Formula 3 and Formula 4 are as follows:

$$\exp\left\{i2\pi\left((f_{c,1}-(j-1)\Delta f)(kT+(j-1)T_c)+\frac{B_c}{2KT}(kT)^2\right)\right\}, j=1,2,\dots,J \quad \text{Formula 3;}$$

and

$$\exp\left\{i2\pi\left((f_{c,J}+(j-1)\Delta f)(kT+(j-1)T_c)+\frac{B_c}{2KT}(kT)^2\right)\right\}, j=1,2,\dots,J \quad \text{Formula 4,}$$

where

$f_{c,1}$ is a start frequency of a first chirp signal in the first signal group (namely, a highest frequency of the first signal group in the downward step), $f_{c,J}$ is a start frequency of a first chirp signal in the second signal group (namely, a lowest frequency of the second signal group in the upward step), T is an ADC sampling time interval, $B_c$ is a bandwidth of a single chirp signal, k is a fast time (single chirp signal) sampling index, K is a quantity of fast time sampling points, j is a slow time (single chirp signal) index, and the chirp signal is the first signal or the second signal.

In a possible implementation, if J first signals are in a linear frequency step, $f_{c,j}$ satisfies the following Formula 5:

$$f_{c,j} = f_{c,1} - (j-1)\Delta f \quad \text{Formula 5,}$$

where

$f_{c,1}$ is a start frequency of a first chirp signal (namely, a 1st first signal in the first signal group).

In a possible implementation, if J second signals are in a linear frequency step, $f_{c,j}$ satisfies the following Formula 6:

$$f_{c,j} = f_{c,J} + (j-1)\Delta f \quad \text{Formula 6,}$$

where

$f_{c,J}$ is a start frequency of a first chirp signal (namely, a 1st second signal in the second signal group).

According to Formula 3 and Formula 4, that the transmit module transmits one frame of transmit signal (which may be referred to as a first transmit signal) may be represented by the following Formula 7:

$$u_{CSF}(k,j) = \begin{cases} \exp\left\{i2\pi\left((f_{c,1}-(j-1)\Delta f)(kT+(j-1)T_c)+\frac{B_c}{2KT}(kT)^2\right)\right\}, j=1,2,\dots,J \\ \exp\left\{i2\pi\left((f_{c,J}+(j-1)\Delta f)(kT+(j-1)T_c)+\frac{B_c}{2KT}(kT)^2\right)\right\}, j=1,2,\dots,J \end{cases}$$

Formula 7.

It should be noted that, for the first transmit signal, because the first transmit signal includes the first signal group and the second signal group, the first transmit signal also has a corresponding pulse repetition interval, and the corresponding pulse repetition interval may be referred to as a third pulse repetition interval. The third pulse repetition interval is equal to duration between start moments of two chirp signals that are close to the first transmit signal, for example, $T_1$ in FIG. 7a. Further, optionally, the third pulse repetition interval may be equal to or less than the first pulse repetition interval, for example, $T_{c1}$ in FIG. 7a, or may be equal to or less than the second pulse repetition interval, for example, $T_{c2}$ in FIG. 7a.

2. Receiving module

In a possible implementation, the receiving module is configured to receive the third signal group and the fourth signal group, where the third signal included in the third signal group is an echo signal obtained after the first signal is reflected by the target, and the fourth signal included in the fourth signal group is an echo signal obtained after the second signal is reflected by the target. Further, the first signal group includes the M first signals, and therefore, the third signal group includes M third signals. The second signal group includes the N second signals, and therefore, the fourth signal group includes N fourth signals.

Compared with the first signal, the third signal is propagated for a period of time, and therefore, has a specific delay $\tau$. Optionally, compared with the second signal, the fourth signal is also propagated for a period of time, and therefore, has a specific delay $\tau$. Refer to Formula 8:

$$\tau = 2(R + vt`)/C \quad \text{Formula 8,}$$

where
R represents a distance between the detection apparatus and the target, t'=t+j $T_c$, t= $kT$, C represents a speed of light, and $v$ represents a speed of the target.

Based on Formula 7, the third signal group includes J third signals, and the fourth signal group includes J fourth signals. An expression of one frame of echo signal (which may be referred to as a first echo signal) may be obtained by substituting Formula 8 into Formula 7, where the first echo signal includes the third signal group and the fourth signal group. Refer to the following Formula 9:

$$r_{CSF}(k, j) =$$

$$\begin{cases} \exp\left\{i2\pi\left((f_{c,1} - (j-1)\Delta f)(kT + (j-1)T_c - \tau) + \frac{B_c}{2KT}(kT - \tau)^2\right)\right\}, j = 1,2,\dots,J \\ \exp\left\{i2\pi\left((f_{c,J} + (j-1)\Delta f)(kT + (j-1)T_c - \tau) + \frac{B_c}{2KT}(kT - \tau)^2\right)\right\}, j = 1,2,\dots,J \end{cases} \quad \text{Formula 9,}$$

where
a first row represents the third signal group, and a second row represents the fourth signal group.

In a possible implementation, the third signal group and the fourth signal group are used to determine association information of the target. Further, the association information of the target may be determined by using a processing module. In other words, the detection apparatus may further include the processing module. The processing module may process the first echo signal, to obtain the association information of the target, for example, a distance and/or a speed of the target.

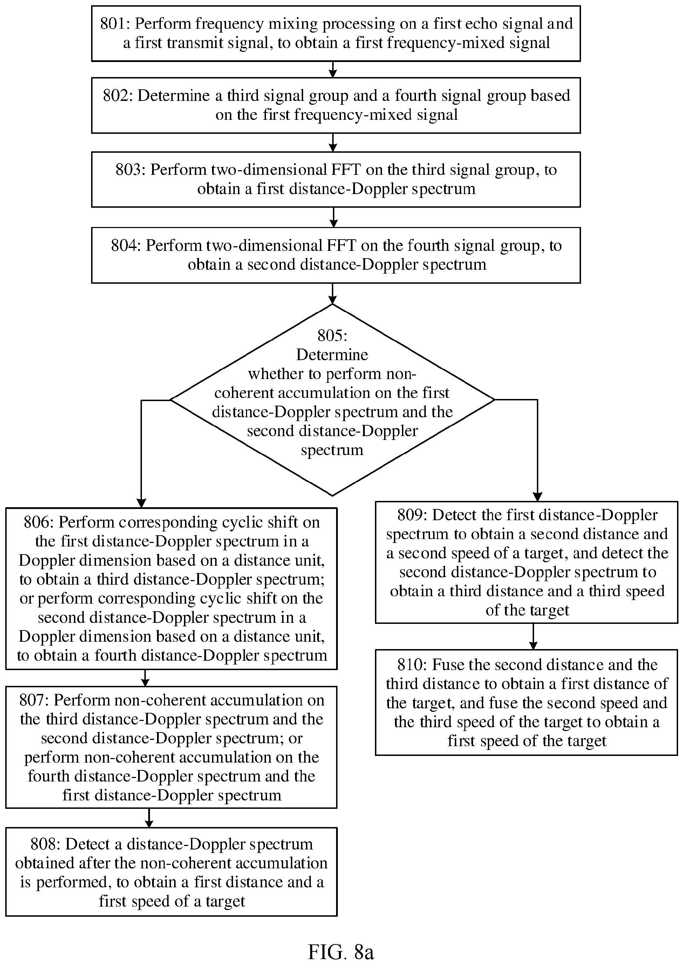

FIG. 8a is a schematic flowchart of a signal processing method according to this application. The method may include the following steps.

Step 801: Perform frequency mixing processing on a first echo signal and a first transmit signal, to obtain a first frequency-mixed signal.

The frequency mixing processing refers to performing frequency mixing on the first echo signal and the corresponding first transmit signal, to obtain the first frequency-mixed signal. The first frequency-mixed signal may be represented by an expression $s_{CSF}(k,j)$. For the first echo signal, refer to $r_{CSF}(k,j)$ in Formula 9; and for the first transmit signal, refer to $u_{CSF}(k,j)$ in Formula 7. For details, refer to the following Formula 10:

$$s_{CSF}(k, j) = r^*_{CSF}(k, j) \times u_{CSF}(k, j)$$

$$= \begin{cases} \exp\left\{i2\pi\left((f_{c,1} - (j-1)\Delta f)\tau + \frac{B_c}{2KT}(2kT\tau - \tau^2)\right)\right\}, j = 1,2,\dots,J \\ \exp\left\{i2\pi\left((f_{c,J} + (j-1)\Delta f)\tau + \frac{B_c}{2KT}(2kT\tau - \tau^2)\right)\right\}, j = 1,2,\dots,J \end{cases} \quad \text{Formula 10,}$$

where
$r^*_{CSF}(k, j)$ represents a conjugate of $r_{CSF}(k,j)$.

Further, simplification and approximation processing may be performed on the expression of the first frequency-mixed signal, to obtain the following Formula 11:

$$s_{CSF}(k,j) =$$

$$\begin{cases} \exp\left\{i\frac{4\pi}{c}\left(f_{c,1}R - R\varphi + \alpha Rt + f_{c,1}vt - v\varphi t + 2vT_cf_{c,1}(j-1) - 2vT_c\varphi(j-1) + 2\alpha vT_c(j-1)t\right)\right\}, j=1,2,\dots,J \\ \exp\left\{i\frac{4\pi}{c}\left(\begin{array}{l}f_{c,1}R + R\varphi + \alpha Rt + f_{c,1}vt + v\varphi t + 2vT_cf_{c,1}(j-1) + 2vT_c\varphi(j-1) + 2\alpha vT_c(j-1)t \\ -(J-1)\Delta fR - \Delta fv(J-1)(t+2(j-1)T_c) + vT_cf_{c,1} - vT_c(J-1)\Delta f + vT_c\varphi + vT_c\alpha t\end{array}\right)\right\}, j=1,2,\dots,J \end{cases}$$

Formula 11,

where

a frequency modulation slope $\alpha$ satisfies $\alpha=B_c/KT$, $\phi=\Delta f(j-1)$, and t= $kT$.

Step 802: Determine a third signal group and a fourth signal group based on the first frequency-mixed signal.

In a possible implementation, the J third signals included in the third signal group and the J fourth signals included in the fourth signal group may be determined based on the index (j) of the first signal and the second signal.

For example, if the transmit module transmits the first transmit signals in a sequence of the first signal, the second signal, the first signal, the second signal, and the like, it may be determined that a first received signal is the third signal, a second received signal is the fourth signal, a third received signal is the third signal, a fourth received signal is the fourth signal, and the rest may be deduced by analogy. Alternatively, it may be understood as follows: The third signal group includes the first received signal, the third received signal, a fifth received signal, and the like; and the fourth signal group includes the second received signal, the fourth received signal, a sixth received signal, and the like. In other words, the third signal group includes J received odd-numbered signals, and the fourth signal group includes J received even-numbered signals. If the transmit module transmits the first transmit signals in a sequence of the second signal, the first signal, the second signal, the first signal, and the like, it may be determined that a first received signal is the fourth signal, a second received signal is the third signal, a third received signal is the fourth signal, a fourth received signal is the third signal, and the rest may be deduced by analogy. Alternatively, it may be understood as follows: The fourth signal group includes the first received signal, the third received signal, a fifth received signal, and the like; and the third signal group includes the second received signal, the fourth received signal, a sixth received signal, and the like. In other words, the fourth signal group includes J received odd-numbered signals, and the third signal group includes J received even-numbered signals.

Step 803: Perform two-dimensional fast Fourier transform (fast Fourier transform, FFT) on the third signal group, to obtain a first distance-Doppler spectrum.

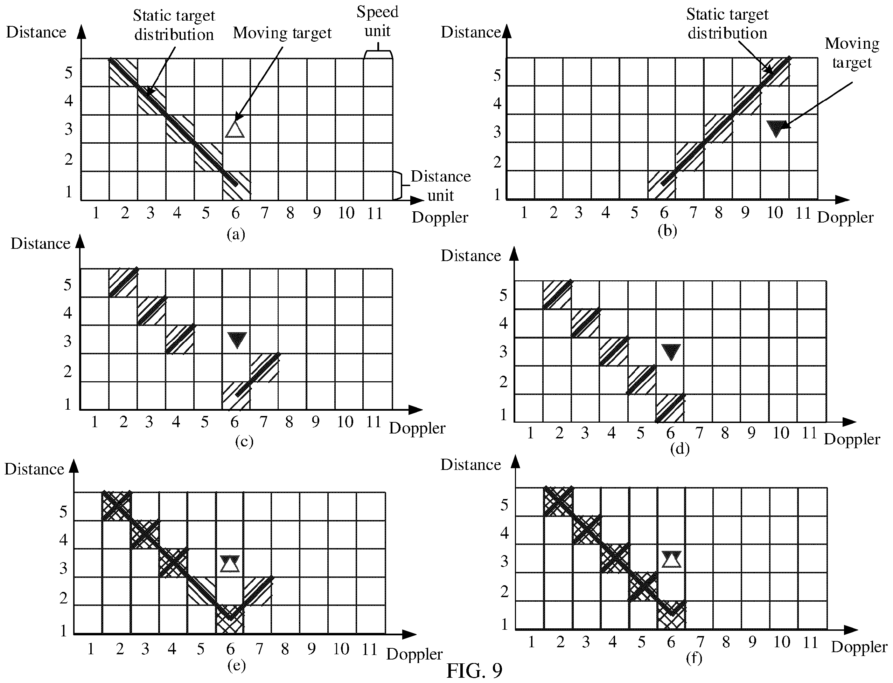

The two-dimensional FFT includes fast time dimension FFT and slow time dimension FFT. The fast time dimension FFT may alternatively be referred to as a distance dimension FFT or a first dimension FFT, and the slow time dimension FFT may alternatively be referred to as a speed dimension FFT or a second dimension FFT. For example, for the first distance-Doppler spectrum, refer to (a) in FIG. 9. A horizontal coordinate represents a speed dimension or a Doppler dimension, and each cell in the speed dimension may be referred to as a speed unit. A vertical coordinate represents a distance dimension, and each cell in the distance dimension may be referred to as a distance unit.

Step 804: Perform two-dimensional FFT on the fourth signal group, to obtain a second distance-Doppler spectrum.

For the two-dimensional FFT, refer to descriptions of step 803. Details are not described herein again. For example, for the second distance-Doppler spectrum, refer to (b) in FIG. 9. A horizontal coordinate represents a speed dimension or a Doppler dimension, and each cell in the speed dimension may be referred to as a speed unit. A vertical coordinate represents a distance dimension, and each cell in the distance dimension may be referred to as a distance unit.

It should be noted that there is no sequence between step 803 and step 804. Step 803 may be performed before step 804, or step 804 may be performed before step 803, or step 803 and step 804 are simultaneously performed. This is not limited in this application.

With reference to Formula 11, because a third item ($\alpha Rt$) of the expression of the third signal group is the same as a third item ($\alpha Rt$) of the expression of the fourth signal group, the third signal group and the fourth signal group have a same fast time dimension (namely, a dimension corresponding to k) of a distance (R) from a measurement target.

Further, because frequency step directions of the third signal group and the fourth signal group are opposite, with reference to Formula 11, FFT processing in a second dimension (namely, a dimension corresponding to j) is performed on a second item ($-R\phi$) of the expression of the third signal group and a second item ($+R\phi$) of the expression of the fourth signal group, to obtain opposite frequencies. For details, refer to FIG. 9 in which tilt directions of slashes in (a) and (b) are opposite.

With reference to FIG. 9, a larger distance indicates a higher introduced frequency of FFT in the second dimension. According to theoretical simulation, amplitude peaks for static targets are distributed along thick slashes in (a) and (b) in FIG. 9. If the thick slash entirely or partially overlaps a cell, it indicates that the cell is occupied by the static target. In FIG. 9, a thin slash is used to indicate that a cell is the cell occupied by the static target. For a moving target, a Doppler shift caused by a speed of the moving target is an offset based on a location of the static target. In addition, an offset based on the third signal group is the same as an offset based on the fourth signal group. In FIG. 9, a solid triangle and a hollow triangle are used to represent moving targets. The hollow triangle represents a moving target detected in the first distance-Doppler spectrum, and the solid triangle represents a moving target detected in the second distance-Doppler spectrum. If the hollow triangle or the solid triangle is in a cell, it indicates that the cell is occupied by the moving target. Optionally, the moving target may further simultaneously occupy a plurality of cells.

Step 805: Determine whether to perform non-coherent accumulation on the first distance-Doppler spectrum and the second distance-Doppler spectrum. If non-coherent accumulation is to be performed on the first distance-Doppler spectrum and the second distance-Doppler spectrum, the following step 806 to step 808 are performed; or if non-coherent accumulation is not to be performed on the first distance-Doppler spectrum and the second distance-Doppler spectrum, the following step 809 and step 810 are performed.

It may be understood that non-coherent accumulation is performed to increase a signal-to-noise ratio. For example, non-coherent accumulation may be performed on the first distance-Doppler spectrum and the second distance-Doppler spectrum for a long-distance target, and non-coherent accumulation is not performed for a short-distance target. The long-distance target may fall, for example, on a target at a location above a distance dimension in (a) or (b) in FIG. 9, and specifically, locations in a third row to a fifth row. For another example, non-coherent accumulation may be performed on the first distance-Doppler spectrum and the second distance-Doppler spectrum for all targets. In this way, the signal-to-noise ratio can be increased, thereby helping improve accuracy of the determined first distance and the determined first speed of the target.

It should be noted that, if the following step 806 to step 808 are performed, frequency modulation slopes of the J first signals in the first signal group are the same as frequency modulation slopes of the J second signals in the second signal group. If the following step 809 and step 810 are performed, frequency modulation slopes of the J first signals in the first signal group may be the same as or different from frequency modulation slopes of the J second signals in the second signal group.

Step 806: Perform corresponding cyclic shift on the first distance-Doppler spectrum in a Doppler dimension based on a distance unit, to obtain a third distance-Doppler spectrum; or perform corresponding cyclic shift on the second distance-Doppler spectrum in a Doppler dimension based on a distance unit, to obtain a fourth distance-Doppler spectrum.

A target in the third distance-Doppler spectrum coincides with a target in the second distance-Doppler spectrum, or a target in the fourth distance-Doppler spectrum coincides with a target in the first distance-Doppler spectrum. The targets include the static target and the moving target.

For example, corresponding cyclic shift is performed on the second distance-Doppler spectrum in the Doppler dimension based on a distance unit, to obtain the fourth distance-Doppler spectrum. Refer to (c) in FIG. 9. In a possible implementation, cyclic shift may alternatively be performed on a specific distance unit (for example, a long-distance cell, namely, a cell in the third row and a cell in a row above the third row) in the Doppler dimension. Specifically, a first row of a line on which the static targets are distributed in (b) in FIG. 9 may not be shifted, a second row is not shifted, the static target in a third row is cyclically shifted leftward by four speed units, the static target in a fourth row is cyclically shifted leftward by six speed units, and the static target in a fifth row is cyclically shifted leftward by eight speed units, to obtain (c) in FIG. 9, so as to implement location overlapping of the static targets on the fourth distance-Doppler spectrum and the second distance-Doppler spectrum. It may be understood that if locations of the static targets on the fourth distance-Doppler spectrum and the second distance-Doppler spectrum overlap, correspondingly, locations of the moving targets on the fourth distance-Doppler spectrum and the second distance-Doppler spectrum also overlap. In another possible implementation, corresponding cyclic shift may be performed on all distance units in the Doppler dimension. Specifically, the first row of the line on which the static targets are distributed in (b) in FIG. 9 may not be shifted, the static target in the second row is cyclically shifted leftward by two speed units, the static target in the third row is cyclically shifted leftward by four speed units, the static target in the fourth row is cyclically shifted leftward by six speed units, and the static target in the fifth row is cyclically shifted leftward by eight speed units, to obtain (d) in FIG. 9, so as to implement location overlapping of the static targets on the fourth distance-Doppler spectrum and the second distance-Doppler spectrum. It should be noted that, in this example, the static targets in (b) in FIG. 9 are cyclically shifted leftward. Alternatively, the static targets in (a) in FIG. 9 may be cyclically shifted rightward, to implement location overlapping of the static targets on the third distance-Doppler spectrum and the first distance-Doppler spectrum.

It may be understood that, if 5×11 cells are shifted leftward, the shifted cells may be cyclically supplemented to a right end.

Alternatively, a row in which the target in (a) in FIG. 9 is located may be cyclically shifted rightward, so that the locations of the static targets in the first distance-Doppler spectrum and the second distance-Doppler spectrum overlap. Refer to (b) in FIG. 9. Details are not described herein again. It may be understood that if locations of the static targets on the first distance-Doppler spectrum and the second distance-Doppler spectrum overlap, correspondingly, locations of the moving targets on the first distance-Doppler spectrum and the second distance-Doppler spectrum also overlap.

Step 807: Perform non-coherent accumulation on the third distance-Doppler spectrum and the second distance-Doppler spectrum, or perform non-coherent accumulation on the fourth distance-Doppler spectrum and the first distance-Doppler spectrum.

After non-coherent accumulation is performed on the third distance-Doppler spectrum and the second distance-Doppler spectrum, (e) in FIG. 9 or (f) in FIG. 9 may be obtained. After non-coherent accumulation is performed on a specific distance unit, (e) in FIG. 9 is obtained. Cyclic shift is performed on a part of the distance-Doppler spectrum in the Doppler dimension based on a distance unit, so that an operation amount caused by cyclic shift can be reduced. After non-coherent accumulation is performed on all distance units, (f) in FIG. 9 is obtained. Cyclic shift is performed on all of the distance-Doppler spectrum in the Doppler dimension based on a distance unit, so that a target signal-to-noise ratio can be increased.

Step 808: Detect a distance-Doppler spectrum obtained through the non-coherent accumulation, to obtain the first distance and the first speed of the target.

Specifically, the distance-Doppler spectrums obtained through incoherent accumulation may be traversed row by row, and a distance corresponding to a location at which a peak value of an amplitude is located is determined as the first distance of the target. The distance-Doppler spectrums obtained through incoherent accumulation are traversed column by column, and a speed corresponding to the location at which the peak value of the amplitude is located is determined as the first speed of the target

With reference to (c) in FIG. 9, it is detected whether a difference between an amplitude of each point and an amplitude of a surrounding point (which may be noise) is greater than a first preset value. If the difference is greater than the first preset value, it is determined that the point is a peak value, that is, corresponds to a target. In another possible implementation, it may be detected whether the amplitude of each point is greater than a second preset value. If the amplitude of the point is greater than the second preset value, it is determined that the point is a peak value, that is, corresponds to one target.

Step 809: Detect the first distance-Doppler spectrum to obtain a second distance and a second speed of the target, and detect the second distance-Doppler spectrum to obtain a third distance and a third speed of the target.

For a specific detection method in step 809, refer to descriptions of the foregoing step 808. Details are not described herein again.

Step 810: Fuse the second distance and the third distance to obtain the first distance of the target, and fuse the second speed and the third speed of the target to obtain the first speed of the target.

In a possible implementation, for a same target, an average value of the second distance and the third distance may be determined as the first distance of the target, and an average value of the second speed and the third speed may be determined as the first speed of the target.

Based on FIG. 8a, a first distance and a first speed of each target detected by the detection apparatus may be determined.

There may be speed ambiguity at the first speed that is of the target and that is obtained based on FIG. 8a. For example, a detection range of the detection apparatus is 0 m/s to 10 m/s. If the first speed of the target is 11 m/s, the detection apparatus determines that the first speed is 1 m/s. In other words, when detecting that the first speed of the target is 1 m/s, the detection apparatus cannot distinguish whether an actual speed is 11 m/s or 1 m/s.

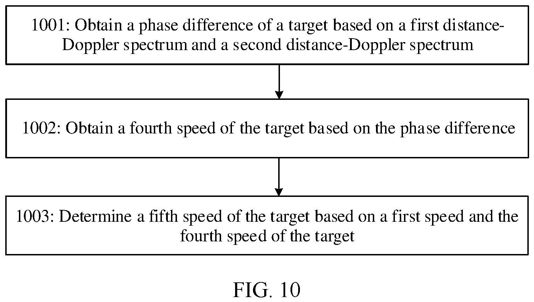

Further, when the first pulse repetition interval $T_{c1}$ and the second pulse repetition interval $T_{c2}$ are greater than twice the third pulse repetition interval $T_{c3}$, ambiguity resolving processing may be performed on the determined first speed of the target. For details, refer to the following descriptions in FIG. 10.

FIG. 10 shows another signal processing method according to this application. The method includes the following steps.

Step 1001: Obtain a phase difference of a target based on a first distance-Doppler spectrum and a second distance-Doppler spectrum.

In a possible implementation, when a first pulse repetition interval $T_{c1}$ and a second pulse repetition interval $T_{c2}$ are greater than twice a third pulse repetition interval $T_{c3}$, the first frequency-mixed signal may be represented by the following Formula 12:

$$s_{CSF}(k,j) =$$
$$\begin{cases} \exp\left\{i\frac{4\pi}{c}\left(f_{c,1}R - R\varphi + \alpha Rt + f_{c,1}vt - v\varphi t + vT_2 f_{c,1}(j-1) - vT_2\varphi(j-1) + \alpha vT_2(j-1)t\right)\right\}, j = 1,2,\ldots,J \\ \exp\left\{i\frac{4\pi}{c}\left(\begin{matrix} f_{c,1}R + R\varphi + \alpha Rt + f_{c,1}vt + v\varphi t + vT_2 f_{c,1}(j-1) + vT_2\varphi(j-1) + \alpha vT_2(j-1)t \\ -(J-1)\Delta fR - \Delta fv(J-1)(t+(j-1)T_2) + vT_1 f_{c,1} - vT_1(J-1)\Delta f + vT_1\varphi + vT_1\alpha t \end{matrix}\right)\right\}, j = 1,2,\ldots,J \end{cases}$$

Formula 12.

In Formula 12, $T_2 = T_{c1} = T_{c2}$. It should be noted that $T_1$ in a first row of Formula 12 is eliminated in a simplification process.

Further, an item irrelevant to k and j may be extracted from Formula 12, and Formula 12 may be represented by the following Formula 13:

$$s_{CSF}(k,j) =$$

$$
\begin{cases}
\exp\left\{i\frac{4\pi}{c}\left(-R\varphi + \alpha Rt + f_{c,1}vt - v\varphi t + vT_2 f_{c,1}(j-1) - vT_2\varphi(j-1) + \alpha vT_2(j-1)t\right)\right\}\exp\left\{i\frac{4\pi}{c}\left(f_{c,1}R\right)\right\}, j = 1,2,\dots,J \\
\exp\left\{i\frac{4\pi}{c}\left(\begin{array}{l} R\varphi + \alpha Rt + f_{c,1}vt + v\varphi t + vT_2 f_{c,1}(j-1) + vT_2\varphi(j-1) \\ +\alpha vT_2(j-1)t - \Delta f v(J-1)(t+(j-1)T_2) + vT_1\varphi + vT_1\alpha t\end{array}\right)\right\}\exp\left\{i\frac{4\pi}{c}\left(f_{c,1}R - (J-1)\Delta fR + vT_1 f_{c,1} - vT_1(J-1)\Delta f\right)\right\}, \\
\qquad\qquad\qquad\qquad\qquad\qquad\qquad j = 1,2,\dots,J
\end{cases}
$$

Formula 13,

where

$$\exp\left\{i\frac{4\pi}{c}\left(f_{c,1}R - (J-1)\Delta fR + vT_1 f_{c,1} - vT_1(J-1)\Delta f\right)\right\}$$

is the item irrelevant to k and j.

Further, with reference to Formula 13, a first row is divided by a second row, to obtain an expression of a fourth speed *v* of the target. Refer to the following Formula 14:

$$\Phi_{CSF}(R,v) = \exp\left\{i\frac{4\pi}{c}\left(-(J-1)\Delta fR + vT_1 f_{c,1} - vT_1(J-1)\Delta f\right)\right\} \qquad \text{Formula 14,}$$

where

$\Phi_{CSF}(R, v)$ represents the phase difference between the first distance-Doppler spectrum and the second distance-Doppler spectrum, and may be obtained based on the first distance-Doppler spectrum and the second distance-Doppler spectrum.

Step 1002: Obtain the fourth speed of the target based on the phase difference.

$\Delta f$, $T_1$, $f_{c,1}$, and J are all known values. R is the first distance, and may be determined based on FIG. 8a. Therefore, $\Phi_{CSF}(R, v)$ can be uniquely determined by the speed *v*. Alternatively, it may be understood as follows: The fourth speed *v* of the target may be determined based on Formula 14. Further, there may be speed ambiguity at the fourth speed *v*.

Step 1003: Determine a fifth speed of the target based on the first speed and the fourth speed of the target.

When $2vT1/f_{c,1}/c>1$, speed ambiguity is generated at the fourth speed, and corresponds to a first maximum speed ambiguity range. When the first speed solved based on FIG. 8a is $2vT2/f_{c,1}/c>1$, speed ambiguity is generated, and corresponds to a second maximum speed ambiguity range. The first maximum speed ambiguity range corresponding to the first speed is different from the second maximum speed ambiguity range corresponding to the fourth speed. Therefore, when the first speed plus s times the second maximum speed ambiguity range is compared with the fourth speed plus h times the first maximum speed ambiguity range, s and h are integers. When the first speed plus s times the second maximum speed ambiguity range is equal to the fourth speed plus h times the first maximum speed ambiguity range, the fifth speed of the target may be determined. The fifth speed is an ambiguity resolving speed. For example, the first maximum speed ambiguity range is 16 m/s, and the second maximum speed ambiguity range is 10 m/s. When the speed of the target is 21 m/s, the measured first speed is 5 m/s, and the measured fourth speed is 1 m/s. In this case, 21 m/s is the first speed plus one time the first maximum speed ambiguity range, and is also the fourth speed plus twice the second maximum speed ambiguity range. Therefore, it may be determined that the fifth speed of the target is 21 m/s.

Therefore, the fifth speed of the target determined based on the foregoing step 1001 to step 1003 has an ambiguity resolving function, so that an unambiguous speed measurement range of the first echo signal can be improved.

Based on the foregoing content, the following uses an example in which the frequency step direction of the first signal group is the downward step and the frequency step direction of the second signal group is the upward step, and uses an example in which two continuous first signals and two continuous second signals are alternately distributed (namely, the foregoing Implementation 3). Specifically, with reference to FIG. 5c, the first signal group includes a first sub-group and a second sub-group. The first sub-group includes the 1st first signal, a 3rd first signal, a 5th first signal, and the like. The second sub-group includes the 2nd first signal, a 4th first signal, and a 6th first signal. In other words, the first sub-group includes odd-numbered first signals, and the second sub-group includes even-numbered first signals. The second signal group includes a third sub-group and a fourth sub-group. The third sub-group includes the 1st second signal, a 3rd first signal, a 5th first signal, and the like. The fourth sub-group includes the 2nd second signal, a 4th second signal, and a 6th second signal. In other words, the third sub-group includes odd-numbered second signals, and the fourth sub-group includes even-numbered second signals. A first sub-pulse repetition interval of the first sub-group is $T_{c3}$, a second sub-pulse repetition interval of the second sub-group is $T_{c4}$, a third sub-pulse repetition interval of the third sub-group is $T_{c5}$, and a fourth sub-pulse repetition interval of the fourth sub-group is $T_{c6}$. A first sub-frequency step size of the first sub-group is the same as a second sub-frequency step size of the second sub-group, and is represented by $\Delta f_{11}$. A third sub-frequency step size of the third sub-group is the same as a fourth sub-frequency step size of the fourth sub-group, and is represented

by $\Delta f_{12}$. In addition, $\Delta f_{11}=\Delta f_{12}$, and both are represented by $\Delta f$. For example, a quantity of first signals included in the first sub-group, a quantity of first signals included in the second sub-group, a quantity of second signals included in the third sub-group, and a quantity of second signals included in the second sub-group are the same, and are represented by J'. For example, the frequency band widths of the first signal and the second signal are the same, and are represented by $B_c$; and the pulse repetition interval of the first transmit signal is represented by $T_1$.

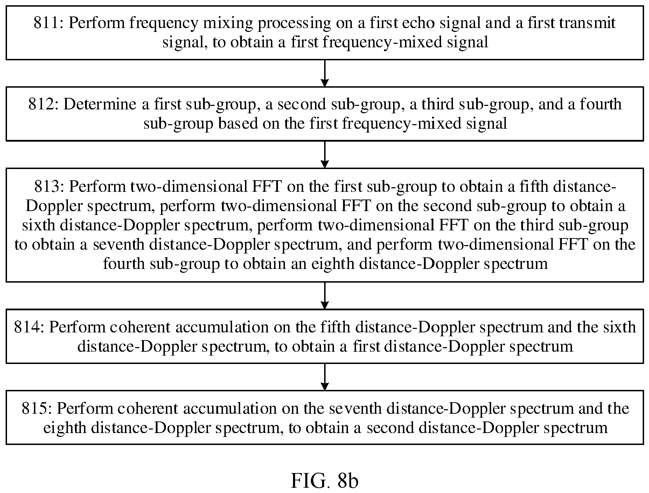

FIG. 8b is a schematic flowchart of another signal processing method according to this application. The method may include the following steps.

Step 811: Perform frequency mixing processing on a first echo signal and a first transmit signal, to obtain a first frequency-mixed signal.

The first frequency-mixed signal may be represented by the following Formula 15:

$$s_{CSF}(k,j) =$$

$$\begin{cases} \exp\left\{i\frac{4\pi}{c}\left(f_{c,1}R - R\varphi + \alpha Rt + f_{c,1}vt - v\varphi t + 2vT_{c3}f_{c,1}(j-1) - 2vT_{c3}\varphi(j-1) + 2\alpha vT_{c3}(j-1)t\right)\right\}, j = 1,2,\dots,J' \\ \exp\left\{i\frac{4\pi}{c}\left(f_{c,1}R - R\varphi + \alpha Rt + f_{c,1}vt - v\varphi t + 2vT_{c3}f_{c,1}(j-1) - 2vT_{c3}\varphi(j-1) + 2\alpha vT_{c3}(j-1)t + \frac{vf_{c,j}T_1}{c}\right)\right\}, j = 1,2,\dots,J' \\ \exp\left\{i\frac{4\pi}{c}\begin{pmatrix} f_{c,1}R + R\varphi + \alpha Rt + f_{c,1}vt + v\varphi t + 2vT_{c5}f_{c,1}(j-1) + 2vT_{c5}\varphi(j-1) + 2\alpha vT_{c5}(j-1)t \\ -(J'-1)\Delta fR - \Delta fv(J'-1)(t + 4(j-1)T_1) + 2vT_1f_{c,1} - 2vT_1(J'-1)\Delta f + 2vT_1\varphi + 2vT_1\alpha t \end{pmatrix}\right\}, j = 1,2,\dots,J' \\ \exp\left\{i\frac{4\pi}{c}\begin{pmatrix} f_{c,1}R + R\varphi + \alpha Rt + f_{c,1}vt + v\varphi t + 2vT_{c5}f_{c,1}(j-1) + 2vT_{c5}\varphi(j-1) + 2\alpha vT_{c5}(j-1)t \\ -(J'-1)\Delta fR - \Delta fv(J'-1)(t + 4(j-1)T_1) + 2vT_1f_{c,1} - 2vT_1(J'-1)\Delta f + 2vT_1\varphi + 2vT_1\alpha t + \frac{vf_{c,j}T_1}{c} \end{pmatrix}\right\}, j = 1,2,\dots,J' \end{cases}$$

Formula 15.

Step 812: Determine a first sub-group, a second sub-group, a third sub-group, and a fourth sub-group based on the first frequency-mixed signal.

For a determining principle of step 812, refer to descriptions of the foregoing step 802. Details are not described herein again.

Step 813: Perform two-dimensional FFT on the first sub-group to obtain a fifth distance-Doppler spectrum, perform two-dimensional FFT on the second sub-group to obtain a sixth distance-Doppler spectrum, perform two-dimensional FFT on the third sub-group to obtain a seventh distance-Doppler spectrum, and perform two-dimensional FFT on the fourth sub-group to obtain an eighth distance-Doppler spectrum.

For step 813, refer to descriptions of the foregoing step 803 or step 804. Details are not described herein again.

Step 814: Perform coherent accumulation on the fifth distance-Doppler spectrum and the sixth distance-Doppler spectrum, to obtain a first distance-Doppler spectrum.

Step 815: Perform coherent accumulation on the seventh distance-Doppler spectrum and the eighth distance-Doppler spectrum, to obtain a second distance-Doppler spectrum.

It should be noted that there is no sequence between step 814 and step 815. Step 814 may be performed before step 815, or step 815 may be performed before step 814, or step 814 and step 815 may be synchronously performed. This is not limited in this application.

It may be understood that for a processing process after the first distance-Doppler spectrum and the second distance-Doppler spectrum are obtained, refer to descriptions of the foregoing step 805 to step 810. Details are not described herein again.

To perform ambiguity resolving processing on the determined first speed of the target, step 1001 in FIG. 10 may alternatively be as follows: Obtain a phase difference of a target based on a fifth distance-Doppler spectrum and a sixth distance-Doppler spectrum. Alternatively, step 1001 may be as follows: Obtain a phase difference of a target based on a seventh distance-Doppler spectrum and an eighth distance-Doppler spectrum. For a specific obtaining principle, refer to descriptions of step 1001. Details are not described herein again.

Based on the foregoing content, the following provides a specific implementation of the foregoing detection apparatus, to further understand the structure of the foregoing detection apparatus and an implementation process in which the detection apparatus determines the association information of the target. It should be noted that, in the foregoing provided modules, if there is no special description or logical conflict, another possible detection apparatus may be formed through combination based on an internal logical relationship of the modules. The two detection apparatuses provided below are merely examples.

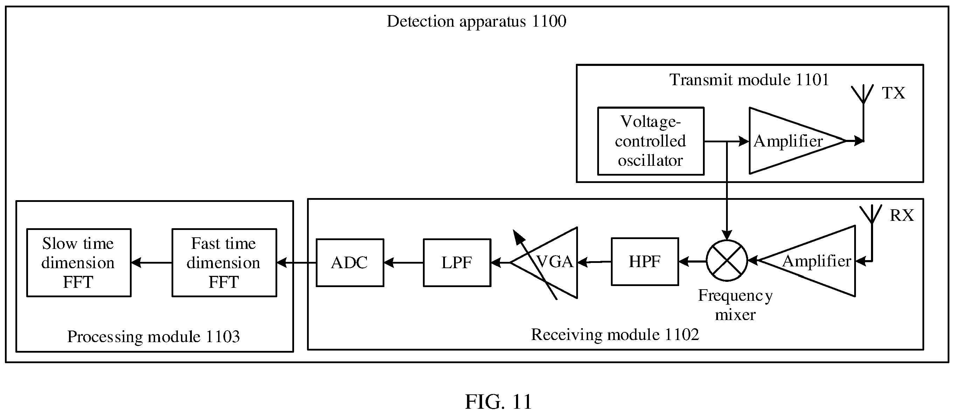

FIG. 11 is a schematic diagram of a structure of another detection apparatus according to this application. A detection apparatus 1100 may include a transmit module 1101 and a receiving module 1102, and may further include a processing module 1103. The transmit module 1101 may include a voltage-controlled oscillator (voltage-controlled oscillator, VCO) and a transmit antenna (transmit antenna, TX). The voltage-controlled oscillator may alternatively be referred to as a waveform generator (waveform generator). The voltage-controlled oscillator is configured to generate M first signals included in a first signal group and N second signals included in a second signal group. In a possible implementation, the first signal and the second signal may be FMCW signals. Generally, the transmit module 1101 transmits one first transmit signal in one frame period, where the first transmit signal includes the first signal group and the second signal group. The frame period is duration for transmitting a complete waveform, and is specifically duration for transmitting the M first signals included in the first signal group and the N second signals included in the second signal group. It should be noted that a part of the first transmit signal is used as a local oscillation signal, and is input to a frequency mixer in the receiving module 1102 by using a coupler; and the other part of the first transmit signal is transmitted through a transmit antenna. For a first signal group and a second signal group included in the part of the first transmit signal transmitted through the transmit antenna, refer to the foregoing related descriptions. Details are not described herein again. Further, optionally, the transmit module 1101 may further include an amplifier, configured to: before the transmit antenna transmits the first transmit signal, amplify power of the to-be-transmitted first transmit signal.

The receiving module 1102 may include a receive antenna (receive antenna, RX), a frequency mixer, a filter (for example, a high pass filter (high pass filter, HPF) and a low pass filter (low pass filter, LPF)), a variable gain amplifier (variable gain amplifier, VGA), and an analog-to-digital converter (analog-to-digital converter, ADC). The receive antenna is configured to: receive a third signal group obtained after the first signal in the first signal group is reflected by a target, and receive a fourth signal group obtained after the second signal in the second signal group is reflected by the target. The third signal group and the fourth signal group may be collectively referred to as a first echo signal. For details, refer to the foregoing related descriptions. The frequency mixer is configured to perform frequency mixing on the first echo signal received by the receive antenna and a corresponding first transmit signal, to obtain an intermediate frequency signal. The intermediate frequency signal is filtered by the filter and amplified by the variable gain amplifier, and then, the intermediate frequency signal is converted into a digital signal by using the ADC. The processing module 1103 may form a two-dimensional array by using a data sequence obtained after sampling and quantization are performed on the digital signal. In the two-dimensional array, one dimension corresponds to a sampling point sequence number k (or referred to as a fast time dimension) of a Chirp signal, and the other dimension corresponds to a chirp signal number (or referred to as a slow time dimension). Then, two-dimensional FFT is performed on the two-dimensional array, to obtain a distance-Doppler spectrum (including a first distance-Doppler spectrum and a second distance-Doppler spectrum). It may be understood that when a first echo signal of each target is represented by using a distance-Doppler spectrum, the first echo signal of each target corresponds to a two-dimensional sinc function, that is, each target corresponds to a local peak value in the distance-Doppler spectrum. The first echo signal represented by the distance-Doppler spectrum is actually a complex two-dimensional array. A modulo operation is performed on the complex two-dimensional array point by point, to obtain a modulus value, and the obtained modulus value corresponds to the local peak value. The local peak corresponds to sequence numbers in two dimensions, and a distance and a speed of the target may be further obtained. For details, refer to descriptions in FIG. 8a and FIG. 10. Details are not described herein again.

Further, in some embodiments, the processing module 1103 may be a circuit having a signal (or data) processing capability. In an implementation, a processor may be a circuit having an instruction reading and running capability, for example, a central processing unit (Central Processing Unit, CPU), or a microprocessor, a graphics processing unit (graphics processing unit, GPU) (which may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is a hardware circuit, for example, an FPGA, that is implemented by using an application-specific integrated circuit (application-specific integrated circuit, ASIC) or a programmable logic device (programmable logic device, PLD). In the reconfigurable hardware circuit, a process in which the processor loads a configuration document to implement hardware circuit configuration may be understood as a process in which the processor loads instructions to implement functions of some or all of the foregoing units.

Based on the foregoing described architecture and function principle of the detection apparatus, this application may further provide a terminal device.

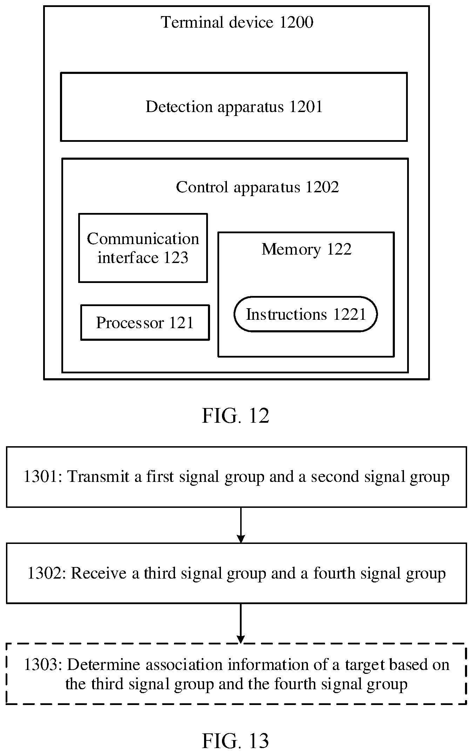

FIG. 12 is a schematic diagram of a structure of a terminal device according to this application. A terminal device 1200 may include a detection apparatus 1201 and a control apparatus 1202 in any one of the foregoing embodiments. The detection apparatus 1201 may send determined association information (for example, a distance and a speed of a target) of the target to the control apparatus 1202. The control apparatus 1202 is configured to plan a driving path based on the received association information of the target. For example, the control apparatus 1202 is configured to: avoid an obstacle on the driving path and implement autonomous driving.

The detection apparatus 1201 may be, for example, a millimeter-wave radar, and may sense a target in a surrounding environment of the terminal device based on a radio signal. In some embodiments, in addition to sensing the target, the millimeter-wave radar may be further configured to sense a speed and/or a forward direction of the target, and the like.

Some or all functions of the terminal device 1200 are controlled by the control apparatus 1202. The control apparatus 1202 may include at least one processor 121. The processor 121 executes instructions 1221 stored in a non-transitory computer-readable medium like a memory 122. Further, the terminal device may further include a communication interface 123. For example, the communication interface 123 may be configured to receive the association information from the target of the detection apparatus 1201. Alternatively, the control apparatus 1202 may be a plurality of computing devices that control an individual component or a subsystem of the terminal device 1200 in a distributed manner.

The processor 121 may be a circuit having a signal (or data) processing capability. In an implementation, the processor may be a circuit having an instruction reading and running capability, for example, a central processing unit (Central Processing Unit, CPU), or a microprocessor, a graphics processing unit (graphics processing unit, GPU) (which may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is a hardware circuit, for example, an FPGA, that is implemented by using an application-specific integrated circuit (application-specific integrated circuit, ASIC) or a programmable logic device (programmable logic device, PLD). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). Although FIG. 12 functionally illustrates the processor, the memory, and another element of the control apparatus 1202 in a same block, a person of ordinary skill in the art should understand that the processor and the memory may actually include a plurality of processors or memories that are not stored in a same physical housing. For example, the memory may be a hard disk drive or another storage medium located in a housing different from that of the control apparatus 1202. For another example, the processor may alternatively be far away from the vehicle, but may perform wireless communication with the vehicle.

In some embodiments, the memory 122 may include instructions 1221 (for example, program logic), and the instructions 1221 may be read by the processor 121, to perform various functions of the terminal device 1200, including the functions described above. The memory 122 may also include additional instructions, including an instruction for sending data to another system (for example, a propulsion system) of the terminal device, receiving data from the another system, interacting with the another system, and/or controlling the another system. In addition to the instructions 1221, the memory 122 may further store data, for example, data detected by the detection apparatus 1201, and a location, a direction, a speed, and other information of a vehicle.

The memory may be, for example, a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium in any other form well-known in the art. For example, a storage medium is coupled to the processor, so that the processor can read information from the storage medium and write information into the storage medium.

It should be noted that the functional framework of the terminal device provided in FIG. 12 is merely an example. In another example, the terminal device 1200 may include more, fewer, or different apparatuses, and each apparatus may include more, fewer, or different components. In addition, the shown apparatuses and components may be combined or split in any manner. This is not specifically limited in this application.

For example, the terminal device may be, for example, a transport device. The transport device may be, for example, a vehicle (for example, an unmanned vehicle, a smart vehicle, an electric vehicle, or a digital vehicle), a ship, a robot, a surveying and mapping device, an unmanned aerial vehicle, a smart home device (for example, a floor scanning robot or an electrical control apparatus), a smart manufacturing device (for example, an industrial device), a smart transportation device (for example, an automated guided vehicle (automated guided vehicle, AGV), an unmanned transportation vehicle, or a truck), or the like. The AGV refers to a transportation vehicle that is equipped with an automated navigation apparatus like an electromagnetic or optical apparatus, can drive along a specified navigation path, and has security protection and various moving functions.

Based on the foregoing content and a same concept, this application provides a signal processing method. Refer to descriptions in FIG. 13. The signal processing method may be applied to the detection apparatus shown in any one of the foregoing embodiments. Alternatively, it may be understood as follows: The signal processing method may be implemented based on the detection apparatus shown in any one of the foregoing embodiments. Alternatively, the signal processing method may be applied to the foregoing terminal device. Alternatively, it may be understood as follows: The signal processing method may be implemented based on the foregoing terminal device.

The signal processing method may be performed by a processing module. The processing module may belong to the detection apparatus, or may be a processing module independent of the detection apparatus, for example, a chip or a chip system. When the control apparatus belongs to a vehicle, the processing module may be a domain processor in the vehicle, or may be an electronic control unit (electronic control unit, ECU) in the vehicle, or the like.

FIG. 13 shows a signal processing method according to this application. The method includes the following steps.

Step 1301: Transmit a first signal group and a second signal group.

M first signals included in the first signal group and N second signals included in the second signal group are alternately distributed.

Step 1301 may be performed by the transmit module of the foregoing detection apparatus. For more detailed descriptions, refer to related descriptions in the foregoing embodiment of the detection apparatus. Details are not described herein one by one again.

Step 1302: Receive a third signal group and a fourth signal group.

A third signal included in the third signal group is an echo signal obtained after the first signal included in the first signal group is reflected by a target, and a fourth signal included in the fourth signal group is an echo signal obtained after the second signal included in the second signal group is reflected by the target.

Step 1302 may be performed by the receiving module of the foregoing detection apparatus. For more detailed descriptions, refer to related descriptions in the foregoing embodiment of the detection apparatus. Details are not described herein one by one again.

Step 1303: Determine association information of the target based on the third signal group and the fourth signal group.

Step 1303 is an optional step. This step may be performed by the foregoing processing module. For more detailed descriptions, refer to related descriptions in the foregoing embodiment of the detection apparatus. Details are not described herein one by one again.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium in any other form well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a detection apparatus. Certainly, the processor and the storage medium may alternatively exist in the detection apparatus as discrete components.

All or some of the foregoing embodiments may be implemented by using software, hardware, firmware, or any combination thereof. When software is used to implement embodiments, all or some of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a detection apparatus, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD).

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually indicates an "or" relationship between associated objects. In a formula in this application, the character "/" indicates a "division" relationship between the associated objects. In this application, a symbol "(a, b)" represents an open interval with a range greater than a and less than b, "[a, b]" represents a closed interval with a range greater than or equal to a and less than or equal to b, "(a, b]" represents a half-open and half-closed interval with a range greater than a and less than or equal to b, and "(a, b]" represents a half-open and half-closed interval with a range greater than a and less than or equal to b. In addition, in this application, the word "example" is used to represent giving an example, an illustration, or a description. Any embodiment or design scheme described as an "example" in this application should not be explained as being more preferred or having more advantages than another embodiment or design scheme. Alternatively, it may be understood as follows: The word "example" is used to present a concept in a specific manner, and does not constitute a limitation on this application.

It may be understood that various numbers in this application are merely used for differentiation for ease of description, and are not used to limit the scope of embodiments of this application. The sequence numbers of the foregoing processes do not mean execution sequences, and the execution sequences of the processes should be determined based on functions and internal logic of the processes. The terms "first", "second", and another similar expression are intended to distinguish between similar objects, but do not necessarily indicate a specific order or sequence. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

Although this application is described with reference to specific features and embodiments thereof, it is clear that various modifications and combinations may be made to the specific features and the embodiments without departing from the spirit and scope of this application. Correspondingly, the specification and accompanying drawings are merely examples for description of the solutions defined by the appended claims, and are considered as any of or all modifications, variations, combinations or equivalents that cover the scope of this application.

It is clear that a person skilled in the art can make various modifications and variations to this application without departing from the spirit and the scope of the present invention. In this way, this application is intended to cover these modifications and variations of embodiments of this application provided that they fall within the scope of protection defined by the following claims and their equivalent technologies.

**Claims**

1.   A detection apparatus, comprising a transmit module and a receiving module, wherein

   the transmit module is configured to transmit a first signal group and a second signal group, wherein M first signals comprised in the first signal group and N second signals comprised in the second signal group are alternately distributed; and

   the receiving module is configured to receive a third signal group and a fourth signal group, wherein the third signal group and the fourth signal group are used to determine association information of a target, a third signal comprised in the third signal group is an echo signal that is of the first signal comprised in the first signal group and that is reflected by the target; and a fourth signal comprised in the fourth signal group is an echo signal that is of the second signal comprised in the second signal group and that is reflected by the target.

2.   The detection apparatus according to claim 1, wherein a frequency step direction of the first signal group is an upward step, and a frequency step direction of the second signal group is a downward step; or
a frequency step direction of the first signal group is a downward step, and a frequency step direction of the second signal group is an upward step.

3.   The detection apparatus according to claim 1 or 2, wherein one first signal and one second signal are alternately distributed; or

   at least two continuous first signals and at least one continuous second signal are alternately distributed; or
   at least one continuous first signal and at least two continuous second signals are alternately distributed; or
   the first signal group and the second signal group are alternately distributed.

4.   The detection apparatus according to any one of claims 1 to 3, wherein a first pulse repetition interval is the same as or different from a corresponding second pulse repetition interval; and
the first pulse repetition interval is a time interval between an $i^{th}$ first signal and an $(i+k_1)^{th}$ first signal in the first signal group, $k_1$ is a positive integer, and $i$ is any integer in $[1, M]$; and the corresponding second pulse repetition interval is a time interval between a $z^{th}$ second signal and a $(z+k_2)^{th}$ second signal in the second signal group, $k_2$ is a positive integer, and $z$ is any integer in $[1, N]$.

5.   The detection apparatus according to claim 4, wherein any two first pulse repetition intervals in the first signal group are the same, and/or any two second pulse repetition intervals in the second signal group are the same.

6.   The detection apparatus according to claim 4, wherein at least two first pulse repetition intervals in the first signal group are different; and/or
at least two second pulse repetition intervals in the second signal group are different.

7. The detection apparatus according to any one of claims 1 to 6, wherein an absolute value of a difference between an absolute value of a first frequency step size and an absolute value of a corresponding second frequency step size is less than or equal to a first threshold; and
the first frequency step size is a frequency offset between an $(m+k_1)^{th}$ first signal and an $m^{th}$ first signal in the first signal group, $k_1$ is a positive integer, and m is any integer in [1, M]; and the second frequency step size is a frequency offset between an $(n+k_2)^{th}$ second signal and an $n^{th}$ second signal in the second signal group, $k_2$ is a positive integer, and n is any integer in [1, N].

8. The detection apparatus according to claim 7, wherein the absolute value of the difference between the absolute value of the first frequency step size and the absolute value of the corresponding second frequency step size is equal to 0.

9. The detection apparatus according to claim 7 or 8, wherein an absolute value of a difference between any two first frequency step sizes in the first signal group is less than or equal to a second threshold, and/or an absolute value of a difference between any two second frequency step sizes in the second signal group is less than or equal to a third threshold.

10. The detection apparatus according to claim 9, wherein the absolute value of the difference between the any two first frequency step sizes in the first signal group is equal to 0, and/or the absolute value of the difference between the any two second frequency step sizes in the second signal group is equal to 0.

11. The detection apparatus according to any one of claims 1 to 9, wherein M is equal to N.

12. The detection apparatus according to any one of claims 1 to 11, wherein the detection apparatus further comprises a processing module, configured to:

    determine the third signal group and the fourth signal group, wherein the third signal group comprises M third signals, the fourth signal group comprises N fourth signals, the M third signals are echo signals obtained after the M first signals are reflected by the target, and the N fourth signals are echo signals obtained after the N second signals are reflected by the target;
    perform two-dimensional fast Fourier transform FFT on the third signal group to obtain a first distance-Doppler spectrum, and perform two-dimensional FFT on the fourth signal group to obtain a second distance-Doppler spectrum, wherein the two-dimensional FFT comprises distance dimension FFT and Doppler dimension FFT; and
    determine the association information of the target based on the first distance-Doppler spectrum and the second distance-Doppler spectrum.

13. The detection apparatus according to claim 12, wherein the association information of the target comprises a first distance and a first speed of the target; and
the processing module is specifically configured to:

    perform cyclic shift on the first distance-Doppler spectrum in a Doppler dimension based on a distance unit to obtain a third distance-Doppler spectrum, and perform non-coherent accumulation on the third distance-Doppler spectrum and the second distance-Doppler spectrum, wherein a target in the third distance-Doppler spectrum coincides with a target in the second distance-Doppler spectrum; or perform cyclic shift on the second distance-Doppler spectrum in the Doppler dimension based on a distance unit to obtain a fourth distance-Doppler spectrum, and perform non-coherent accumulation on the fourth distance-Doppler spectrum and the first distance-Doppler spectrum, wherein a static target in the fourth distance-Doppler spectrum coincides with a static target in the first distance-Doppler spectrum; and
    detect a distance-Doppler spectrum obtained through the non-coherent accumulation, to obtain the first distance and the first speed of the target.

14. The detection apparatus according to claim 12, wherein the association information of the target comprises a first distance and a first speed of the target; and
the processing module is specifically configured to:

    detect the first distance-Doppler spectrum to obtain a second distance and a second speed of the target, and detect the second distance-Doppler spectrum to obtain a third distance and a third speed of the target; and fuse the second distance and the third distance to obtain the first distance of the target, and fuse the second speed and the third speed to obtain the first speed of the target.

15. The detection apparatus according to claim 13 or 14, wherein the first pulse repetition interval is different from the second pulse repetition interval; and
the processing module is further configured to:

obtain a phase difference of the target based on the first distance-Doppler spectrum and the second distance-Doppler spectrum;
obtain a fourth speed of the target based on the phase difference; and
determine a fifth speed of the target based on the first speed and the fourth speed of the target.

16. A terminal device, comprising a control apparatus and the detection apparatus according to any one of claims 1 to 15, wherein the control apparatus is configured to plan a driving path based on association information of a target from the detection apparatus.

17. A signal processing method, comprising:

transmitting a first signal group and a second signal group, wherein M first signals comprised in the first signal group and N second signals comprised in the second signal group are alternately distributed; and
receiving a third signal group and a fourth signal group, wherein the third signal group and the fourth signal group are used to determine association information of a target, a third signal comprised in the third signal group is an echo signal obtained after the first signal comprised in the first signal group is reflected by the target, and a fourth signal comprised on the fourth signal group is an echo signal obtained after the second signal comprised in the second signal group is reflected by the target.

18. The method according to claim 17, wherein the method further comprises:

determining the third signal group and the fourth signal group, wherein the third signal group comprises M third signals, the fourth signal group comprises N fourth signals, the M third signals are echo signals obtained after the M first signals are reflected by the target, and the N fourth signals are echo signals obtained after the N second signals are reflected by the target;
performing two-dimensional fast Fourier transform FFT on the third signal group to obtain a first distance-Doppler spectrum, and performing two-dimensional FFT on the fourth signal group to obtain a second distance-Doppler spectrum, wherein the two-dimensional FFT comprises distance dimension FFT and Doppler dimension FFT; and
determining the association information of the target based on the first distance-Doppler spectrum and the second distance-Doppler spectrum.

19. The method according to claim 18, wherein the association information of the target comprises a first distance and a first speed of the target; and
the determining the association information of the target based on the first distance-Doppler spectrum and the second distance-Doppler spectrum comprises:

performing cyclic shift on the first distance-Doppler spectrum in a Doppler dimension based on a distance unit to obtain a third distance-Doppler spectrum, and performing non-coherent accumulation on the third distance-Doppler spectrum and the second distance-Doppler spectrum, wherein a target in the third distance-Doppler spectrum coincides with a target in the second distance-Doppler spectrum; or performing cyclic shift on the second distance-Doppler spectrum in the Doppler dimension based on a distance unit to obtain a fourth distance-Doppler spectrum, and performing non-coherent accumulation on the fourth distance-Doppler spectrum and the first distance-Doppler spectrum, wherein a static target in the fourth distance-Doppler spectrum coincides with a static target in the first distance-Doppler spectrum; and
detecting a distance-Doppler spectrum obtained through the non-coherent accumulation, to obtain the first distance and the first speed of the target.

20. The method according to claim 18, wherein the association information of the target comprises a first distance and a first speed of the target; and
the determining the association information of the target based on the first distance-Doppler spectrum and the second distance-Doppler spectrum comprises:

detecting the first distance-Doppler spectrum to obtain a second distance and a second speed of the target, and detecting the second distance-Doppler spectrum to obtain a third distance and a third speed of the target; and fusing the second distance and the third distance to obtain the first distance of the target, and fusing the second speed and the third speed to obtain the first speed of the target.

21. The method according to claim 19 or 20, wherein a first pulse repetition interval is different from a second pulse repetition interval; and

the method further comprises:

obtaining a phase difference of the target based on the first distance-Doppler spectrum and the second distance-Doppler spectrum;
obtaining a fourth speed of the target based on the phase difference; and
determining a fifth speed of the target based on the first speed and the fourth speed of the target.

FIG. 1a

FIG. 1b

Detection apparatus

FIG. 2a

Detection apparatus

Detection apparatus

FIG. 2b

FIG. 3a

FIG. 3b

FIG. 3c

FIG. 3d

FIG. 3e

FIG. 4

FIG. 5a

Frequency

First signal group          Second signal group

Time

FIG. 5b

First signal
group

Second
signal group

Time

FIG. 5c

FIG. 5d

FIG. 5e

FIG. 5f

FIG. 6a

FIG. 6b

FIG. 7a

FIG. 7b

801: Perform frequency mixing processing on a first echo signal and a first transmit signal, to obtain a first frequency-mixed signal

802: Determine a third signal group and a fourth signal group based on the first frequency-mixed signal

803: Perform two-dimensional FFT on the third signal group, to obtain a first distance-Doppler spectrum

804: Perform two-dimensional FFT on the fourth signal group, to obtain a second distance-Doppler spectrum

805: Determine whether to perform non-coherent accumulation on the first distance-Doppler spectrum and the second distance-Doppler spectrum

806: Perform corresponding cyclic shift on the first distance-Doppler spectrum in a Doppler dimension based on a distance unit, to obtain a third distance-Doppler spectrum; or perform corresponding cyclic shift on the second distance-Doppler spectrum in a Doppler dimension based on a distance unit, to obtain a fourth distance-Doppler spectrum

807: Perform non-coherent accumulation on the third distance-Doppler spectrum and the second distance-Doppler spectrum; or perform non-coherent accumulation on the fourth distance-Doppler spectrum and the first distance-Doppler spectrum

808: Detect a distance-Doppler spectrum obtained after the non-coherent accumulation is performed, to obtain a first distance and a first speed of a target

809: Detect the first distance-Doppler spectrum to obtain a second distance and a second speed of a target, and detect the second distance-Doppler spectrum to obtain a third distance and a third speed of the target

810: Fuse the second distance and the third distance to obtain a first distance of the target, and fuse the second speed and the third speed of the target to obtain a first speed of the target

FIG. 8a

811: Perform frequency mixing processing on a first echo signal and a first transmit signal, to obtain a first frequency-mixed signal

↓

812: Determine a first sub-group, a second sub-group, a third sub-group, and a fourth sub-group based on the first frequency-mixed signal

↓

813: Perform two-dimensional FFT on the first sub-group to obtain a fifth distance-Doppler spectrum, perform two-dimensional FFT on the second sub-group to obtain a sixth distance-Doppler spectrum, perform two-dimensional FFT on the third sub-group to obtain a seventh distance-Doppler spectrum, and perform two-dimensional FFT on the fourth sub-group to obtain an eighth distance-Doppler spectrum

↓

814: Perform coherent accumulation on the fifth distance-Doppler spectrum and the sixth distance-Doppler spectrum, to obtain a first distance-Doppler spectrum

↓

815: Perform coherent accumulation on the seventh distance-Doppler spectrum and the eighth distance-Doppler spectrum, to obtain a second distance-Doppler spectrum

FIG. 8b

FIG. 9

1001: Obtain a phase difference of a target based on a first distance-Doppler spectrum and a second distance-Doppler spectrum

1002: Obtain a fourth speed of the target based on the phase difference

1003: Determine a fifth speed of the target based on a first speed and the fourth speed of the target

FIG. 10

Detection apparatus 1100

Transmit module 1101

Voltage-controlled oscillator → Amplifier → TX

Slow time dimension FFT ← Fast time dimension FFT ← ADC ← LPF ← VGA ← HPF ← Frequency mixer ← Amplifier ← RX

Processing module 1103

Receiving module 1102

FIG. 11

EP 4 462 158 A1

Terminal device 1200

Detection apparatus 1201

Control apparatus 1202

Communication interface 123

Memory 122

Processor 121

Instructions 1221

FIG. 12

1301: Transmit a first signal group and a second signal group

1302: Receive a third signal group and a fourth signal group

1303: Determine association information of a target based on the third signal group and the fourth signal group

FIG. 13

## INTERNATIONAL SEARCH REPORT

| | International application No. |
|---|---|
| | **PCT/CN2022/075257** |

**A.　CLASSIFICATION OF SUBJECT MATTER**

G01S 13/34(2006.01)i;　G01S 7/02(2006.01)i

According to International Patent Classification (IPC) or to both national classification and IPC

**B.　FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

WPABSC; CNTXT; CNABS; CJFD; ENTXTC; VCN; VEN: 探测, 发射, 交替, 频率, 步进, 方向不同, 目标, 傅里叶变换, transmit, alternate, frequency, step, different direction, target, FFT

**C.　DOCUMENTS CONSIDERED TO BE RELEVANT**

| Category* | Citation of document, with indication, where appropriate, of the relevant passages | Relevant to claim No. |
|---|---|---|
| X | CN 108693531 A (HEFEI SOFTEC AUTO-ELECTRONIC CO., LTD.) 23 October 2018 (2018-10-23)<br>　　description, paragraphs 15-16 and 23-41 | 1, 3-12, 16-18 |
| Y | CN 108693531 A (HEFEI SOFTEC AUTO-ELECTRONIC CO., LTD.) 23 October 2018 (2018-10-23)<br>　　description, paragraphs 15-16 and 23-41 | 2 |
| Y | 曹宇飞等 (CAO, Yufei et al.). "双载频步进频率雷达精确速度测量方法 (Precise Velocity Measurement Approach in Dual-Carrier-Frequency Stepped-Frequency Radar)"<br>电子与信息学报 (Journal of Electronics & Information Technology), Vol. 31, No. 05, ISSN: ,<br>　　page 1114, section 3, paragraph 1, and figure 1 | 2 |
| A | CN 106338727 A (NANJING UNIVERSITY OF SCIENCE AND TECHNOLOGY) 18 January 2017 (2017-01-18)<br>　　entire document | 1-21 |
| A | US 2018172816 A1 (NATIONAL CHUNG-SHAN INSTITUTE OF SCIENCE & TECHNOLOGY) 21 June 2018 (2018-06-21)<br>　　entire document | 1-21 |

☑ Further documents are listed in the continuation of Box C.　　☑ See patent family annex.

| | |
|---|---|
| *　　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| **29 October 2022** | **04 November 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/075257**

### C. DOCUMENTS CONSIDERED TO BE RELEVANT

| Category* | Citation of document, with indication, where appropriate, of the relevant passages | Relevant to claim No. |
|---|---|---|
| A | US 2018157330 A1 (GOOGLE INC.) 07 June 2018 (2018-06-07)<br>entire document | 1-21 |

Form PCT/ISA/210 (second sheet) (January 2015)

International application No.

**PCT/CN2022/075257**

| Patent document cited in search report | | | Publication date (day/month/year) | Patent family member(s) | | | Publication date (day/month/year) |
|---|---|---|---|---|---|---|---|
| CN | 108693531 | A | 23 October 2018 | None | | | |
| CN | 106338727 | A | 18 January 2017 | None | | | |
| US | 2018172816 | A1 | 21 June 2018 | None | | | |
| US | 2018157330 | A1 | 07 June 2018 | DE | 202017105261 | U1 | 08 March 2018 |
| | | | | WO | 2018106306 | A1 | 14 June 2018 |
| | | | | CN | 108153410 | A | 12 June 2018 |